(19) Europäisches Patentamt
European Patent Office
Office européen des brevets

(11) EP 2 904 052 B1

(12) **EUROPÄISCHE PATENTSCHRIFT**

(45) Veröffentlichungstag und Bekanntmachung des Hinweises auf die Patenterteilung:
**05.07.2017 Patentblatt 2017/27**

(21) Anmeldenummer: **13767019.6**

(22) Anmeldetag: **30.09.2013**

(51) Int Cl.:
***C09C 1/00*** *(2006.01)* ***C09D 5/36*** *(2006.01)*

(86) Internationale Anmeldenummer:
**PCT/EP2013/070376**

(87) Internationale Veröffentlichungsnummer:
**WO 2014/053454 (10.04.2014 Gazette 2014/15)**

(54) **WETTERSTABILE PERLGLANZPIGMENTE, VERFAHREN ZU IHRER HERSTELLUNG UND VERWENDUNG**

WEATHER-RESISTANT PEARL GLOSS PIGMENTS, METHOD FOR THE PRODUCTION THEREOF AND USE

PIGMENTS PERLESCENTS RÉSISTANTS AUX INTEMPÉRIES, LEUR PROCÉDÉ DE FABRICATION ET D'UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.10.2012 DE 102012109407**

(43) Veröffentlichungstag der Anmeldung:
**12.08.2015 Patentblatt 2015/33**

(73) Patentinhaber: **Eckart GmbH**
**91235 Hartenstein (DE)**

(72) Erfinder:
- **GRÜNER, Michael**
  **91275 Auerbach (DE)**
- **KAUPP, Günter**
  **91284 Neuhaus (DE)**
- **SCHNEIDER, Thomas**
  **91207 Lauf a. d. Pegnitz (DE)**

(74) Vertreter: **Louis Pöhlau Lohrentz**
**Patentanwälte**
**Postfach 30 55**
**90014 Nürnberg (DE)**

(56) Entgegenhaltungen:
**EP-A1- 1 808 465** **EP-A1- 2 093 260**
**DE-A1- 10 348 174** **DE-A1-102006 009 130**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 904 052 B1

## Beschreibung

Perlglanzpigmente, die Titandioxid in der Deckschicht enthalten bzw. die aus partikelförmigem $TiO_2$ aufgebaut sind, besitzen eine gewisse photokatalytische Aktivität. Wirkt nun UV-Licht in Gegenwart von Wasser und Sauerstoff auf ein Perlglanzpigment ein, so kann die UV-Aktivität des Perlglanzpigments einen beschleunigten Abbau von organischen Verbindungen, z. B. einer Bindemittelmatrix, auslösen. Bereits der im Tageslicht enthaltene UV-Anteil kann diese Reaktion bedingen, d. h. für Applikationen wie Automobillackierungen, die der Witterung direkt ausgesetzt sind, müssen besonders stabilisierte Perlglanzpigmente eingesetzt werden. Um diesem für die Außenanwendung nachteiligen Effekt entgegenzuwirken, können Perlglanzpigmente zur Verminderung der Photoaktivität mit verschiedenen Schutzbeschichtungen ausgestattet werden. Üblicherweise werden dabei ausgehend von wässrigen Metallsalzlösungen schwerlösliche Verbindungen als Metalloxide auf die Oberfläche der Pigmente gefällt. Hierbei werden vorwiegend zwei unterschiedliche Metalloxide verwendet. Um die Kompatibilität der Pigmente zu unterschiedlichen Lacken, insbesondere aber zu den umweltverträglicheren wasserbasierenden Systemen, zu fördern, wird in der Regel noch eine zusätzliche organische Modifizierung der Deckschicht, z. B. mittels Silanen, aufgebracht.

Gemäß der Lehre der EP 0 632 109 A1 wird eine dreischichtige Schutzschicht auf ein mit Metalloxiden belegtes plättchenförmiges Substrat aufgebracht. In einer 1. Stufe wird eine $SiO_2$ Schicht, in einer 2. Stufe wird ein Hydroxid oder Oxidhydrat von Cer, Aluminium oder Zirkonium und in einer 3. Stufe werden mindestens ein Hydroxid oder Oxidhydrat von Cer, Aluminium oder Zirkonium sowie ein organisches Kupplungsreagenz aufgebracht. Dieser dreischichtige Aufbau ist nachteiligerweise sehr aufwendig und entsprechend kostenintensiv bei der Herstellung. Darüber hinaus müssen die Kupplungsreagenzien vor der Bindung an die Pigmentoberfläche hydrolysiert werden, wobei gemäß der Lehre der EP 0 888 410 B1 jedoch nur maximal 60 % der zugesetzten Kupplungsreagenzien an die Pigmentoberfläche gebunden werden können.

Die EP 0 888 410 B1 offenbart modifizierte Perlglanzpigmente auf der Basis eines mit Metalloxiden beschichteten, plättchenförmigen Substrates. Gemäß der Lehre der EP 0 888 410 B1 besteht die Deckschicht aus mindestens zwei Oxiden, gemischten Oxiden oder Mischoxiden von Siliziumdioxid, Aluminumoxid, Ceroxid, Titandioxid oder Zirkoniumdioxid und einem wasserbasierenden oligomeren Silan.

Die EP 1 682 622 B1 offenbart ebenfalls eine Deckschicht aus zwei Metalloxiden, wobei hier zwingend zuerst eine Ceroxidschicht und nachfolgend eine $SiO_2$-Schicht gefällt wird. Als Kupplungsreagenzien werden ebenfalls vorwiegend Silane eingesetzt.

Die EP 0 881 998 B1 offenbart wetterstabile Perlglanzpigmente mit einer Deckschicht entweder aus Aluminiumoxid oder einem wiederum zweischichtigen Aufbau aus Aluminiumoxid und Ceroxid sowie Silanen als Kupplungsreagenzien.

Die 0 141 174 B1 offenbart wetterstabile Perlglanzpigmente mit einer Deckschicht, welche Cerhydroxid enthält. Es wird in dieser Schrift vorgeschlagen, diese Deckschicht durch eine Silikatschicht und bevorzugt durch weitere Oxidschichten wie Aluminiumoxid oder Zinkoxid zu ergänzen, um eine bessere Anbindung von polymeren Siloxanen, die als Kupplungsmittel fungieren können, zu gewährleisten.

Die DE 103 48 174 A1 offenbart wetterstabile Perlglanzpigmente, bei der u.a. eine Schicht aus Zinndioxid in der Deckschicht die Schwitzwasserstabilität gewährleistet.

Bei dem vorgenannten Stand der Technik wird die UV-Aktivität der hochbrechenden $TiO_2$-Schicht meist durch mindestens zwei verschiedene Oxidschichten oder eine Mischschicht zweier Oxide unterdrückt.

In der EP 1 084 198 B1 sind Effektpigmente beschrieben, die aufgrund ihrer Oberflächenmodifizierung mit reaktiven Orientierungsmitteln, sehr gute Haftfestigkeiten zum Basislack aufweisen. Die EP 1 084 198 B1 offenbart jedoch keine Wetter- und UV-stabilen Perlglanzpigmente.

Die vorhandenen Wetterstabilisierungsbeschichtungen kommen an Grenzen, wenn es um die Beschichtung von optisch sehr hochwertigen Perlglanzpigmenten geht. Bei Verwendung synthetischer Substrate wie beispielsweise Glassflakes, d. h. Glasplättchen, oder synthetischem Glimmer werden farblich sehr reine Perlglanzpigmente erhalten. Jedwede Nachbeschichtung in Form einer Deckschicht zur Wetterstabilisierung kann leicht zu unerwünschten Farbveränderungen bei dem optischen Eindruck des Perlglanzpigmentes führen. Diese können verschiedene Ursachen haben: die Beschichtung kann eine Eigenfärbung aufweisen, was z. B. bei Cer-oxiden der Fall ist. Bei Verwendung sehr dicker Deckschichten kann eine optische Verschiebung durch Interferenz stattfinden, beispielsweise bei Verwendung von $ZrO_2$, oder es kann zu Glanzeinbußen, beispielsweise bei Verwendung von $SiO_2$, kommen. Insbesondere bei Perlglanzpigmenten mit sehr dicken $TiO_2$-Schichten, die zu Interferenzen im Bereich der dritten Ordnung führen, und sehr feinen, d. h. sehr dünnen Substraten, ist die photokatalytische Aktivität der $TiO_2$-Schicht besonders ausgeprägt, und es treten Störungen mit und bei den bekannten Stabilisierungssystemen auf.

Auf der anderen Seite muss bei Verwendung einer insgesamt sehr dünnen Deckschicht zur Vermeidung von optischen Störungen, diese noch sehr effektiv die Wetterstabilität des Perlglanzpigments gewährleisten.

Die DE 10 2006 009 130 A1 offenbart wetterstabile Perlglanzpigmente. Die EP 1 808 465 A1 offenbart ein Perlglanzpigment zur Verwendung im Freien.

Aufgabe der vorliegenden Erfindung ist es daher, ein wetterstabiles Perlglanzpigment bereit zu stellen, welches die vorgenannten Nachteile aus dem Stand der Technik nicht aufweist. Die wetterstabilen Perlglanzpigmente sollen insbesondere in ihren optischen Eigenschaften nicht durch eine Deckschicht beeinträchtigt werden und auf einfache Weise zugänglich sein. Die Deckschicht soll gleichzeitig eine hocheffektive Wetterstabilität gewährleisten.
Die Aufgabe wird gelöst durch Bereitstellung eines wetterstabilen Perlglanzpigments, umfassend

ein beschichtetes oder unbeschichtetes plättchenförmiges Substrat, das aus der Gruppe, die aus synthetischen Glimmerplättchen, Glasplättchen, $SiO_2$-Plättchen, $Al_2O_3$-Plättchen, synthetischen Böhmitplättchen, BiOCl-Plättchen und deren Mischungen besteht, ausgewählt ist,
eine farbgebende Beschichtung mit mindestens einem hochbrechenden Metalloxid, und
eine Deckschicht,

dadurch gekennzeichnet,
dass die Deckschicht folgende Schichtenfolge umfasst:

a) eine erste Schicht aus Zinnoxid und/oder Zinnhydroxid und/oder Zinnoxidhydrat,
b) eine zweite Cer-haltige Schicht, die Ceroxid und/ oder Cerhydroxid und/ oder Ceroxidhydrat umfasst,
c) eine auf der Cer-haltigen Schicht aufgebrachte organisch-chemische Beschichtung, welche oligomere Silanen enthält oder daraus besteht, wobei die die oligomeren Silane eine oder mehrere Aminogruppen aufweisen und die oligomeren Silanen mit der Cer-haltigen Schicht chemisch verbunden sind.

Bevorzugte Weiterbildungen sind in den Unteransprüchen 2 bis 13 angegeben.
Eine weitere Aufgabe der Erfindung ist es, ein einfaches und kostengünstiges Verfahren zur Herstellung der erfindungsgemäßen Perlglanzpigmente bereitzustellen.
Die Aufgabe wurde gelöst durch ein Verfahren zur Herstellung von wetterstabilem Perlglanzpigment nach einem der vorstehenden Ansprüche,
dadurch gekennzeichnet,
dass das Verfahren folgende Schritte umfasst:

a) Optional Klassieren von beschichteten oder unbeschichteten plättchenförmigen Substraten unter Erhalt von Substraten, welche vorzugsweise die Kennzahlen $D_{10}$, $D_{50}$, $D_{90}$ aus einer Summenhäufigkeitsverteilung einer volumengemittelten Größenverteilungsfunktion mit einem Span $\Delta D$ in einem Bereich von 0,7 - 1,4 aufweisen,
b) Suspendieren von beschichteten oder unbeschichteten plättchenförmigen Substraten, optional aus Schritt a), in wässriger Lösung und Beschichten der beschichteten oder unbeschichteten plättchenförmigen Substrate mit einem oder mehreren hochbrechenden Metalloxid(en) unter Erhalt von Perlglanzpigmenten, die optional calciniert werden,
c) Beschichten der in Schritt b) beschichteten Perlglanzpigmente in wässriger Lösung mit Zinnoxid, Zinnhydroxid und/oder Zinnoxidhydrat durch Hydrolyse eines Zinnsalzes oder einer hydrolysierbaren Zinn-metallorganischen Verbindung in einem pH-Bereich von 1,5 bis 3,0,
d) Beschichten der in Schritt c) beschichteten Perlglanzpigmente in wässriger Lösung mit Ceroxid, Cerhydroxid und/oder Ceroxidhydrat durch Hydrolyse eines Cer-salzes oder einer hydrolysierbaren Cer-metallorganischen Verbindung,
e) Beschichten der in Schritt d) beschichteten Perlglanzpigmente in wässriger Lösung mit oligomeren Silanen,
f) Abtrennen der in Schritt e) beschichteten Perlglanzpigmente, optional Waschen mit vollentsalztem Wasser, und
g) optional Trocknen, vorzugsweise bei einer Temperatur aus einem Bereich von 80° bis 160° C.

Die vorliegende Erfindung stellt wetterstabile Perlglanzpigmente mit optisch sehr hochwertigen Eigenschaften bereit. Unter optisch sehr hochwertigen Eigenschaften werden insbesondere ein ausgezeichneter Glanz und Farbreinheit der Perlglanzpigmente in einem Anwendungsmedium verstanden.
Diese hochwertigen optischen Eigenschaften werden maßgeblich auch von der Qualität des plättchenförmigen Substrates beeinflusst.
Aus diesem Grund werden bei der Herstellung der erfindungsgemäßen Perlglanzpigmente ausschließlich synthetische plättchenförmige Substrate verwendet, die im Unterschied zu beispielsweise natürlichen Glimmerplättchen sehr glatte Oberflächen und scharfe Bruchkanten aufweisen.
Die plättchenförmigen Substrate werden erfindungsgemäß aus der Gruppe, die aus synthetischen Glimmerplättchen, Glasplättchen, $SiO_2$-Plättchen, $Al_2O_3$-Plättchen, synthetischen Böhmitplättchen, BiOCl-Plättchen und deren Mischungen besteht, ausgewählt.
Bevorzugt werden die plättchenförmigen synthetischen Substrate aus der Gruppe, die aus synthetischen Glimmerplättchen, Glasplättchen, $Al_2O_3$-Plättchen und deren Mischungen besteht, ausgewählt. Besonders bevorzugt werden

die plättchenförmigen synthetischen Substrate aus der Gruppe, die aus Glasplättchen, synthetischen Glimmerplättchen sowie deren Mischungen besteht, ausgewählt.

Die vorgenannten synthetischen Substrate sind aus einer Reihe von Patentanmeldungen bzw. Patenten bekannt. Besteht z. B. das plättchenförmige synthetische Substrat aus Glasplättchen, so werden im Rahmen dieser Erfindung bevorzugt jene verwendet, die nach den in EP 0 289 240 A1, WO 2004/056716 A1 und der WO 2005/063637 A1 beschriebenen Verfahren hergestellt werden. Die als Substrat verwendbaren Glasplättchen können beispielsweise eine Zusammensetzung entsprechend der Lehre der EP 1 980 594 B1 aufweisen.

Die in diesen Schriften beschriebenen Glasplättchen, auch als Glasflakes bezeichnet, zeichnen sich durch besonders homogene Oberflächen und Dicken der Plättchen aus. Die Dicke der Glasplättchen variiert vorzugsweise mit einer Standardabweichung von maximal 20 %, weiter bevorzugt von maximal 15 %, noch weiter bevorzugt von maximal 10 %. Die mittleren Dicken der Glasplättchen liegen in einem Bereich von 20 bis 2.000 nm, bevorzugt in einem Bereich von 100 bis unter 1.000 nm.

Bevorzugt handelt es sich bei diesen Glasplättchen um solche, die nach folgendem Verfahren hergestellt wurden (siehe EP 0 289 240 B1):

- Einspeisen eines Stroms aus geschmolzenem Glas in Abwärtsrichtung in einer rotierenden Schale
- Fließenlassen der Glasschmelze über die Kante der Schale in einer Weise, dass es in eine Lücke zwischen einem Plattenpaar gedrängt wird, das die Schale umgibt, wobei die Bewegung des Materials in einer radialen Richtung erfolgt und durch einen Luftstrom zwischen den Platten bewirkt wird, so dass der Radialstrom in radialer Richtung so gedrückt wird, dass er flach bleibt und das Material, wenn Verfestigung eintritt, in Flakes gebrochen wird.

Optisch besonders hochwertige Perlglanzpigmente basierend auf synthetischen Substraten sind auch aus der EP 2 217 664 B1 bekannt, deren Inhalt hiermit unter Bezugnahme aufgenommen ist. Der Lehre der EP 2 217 664 B1 ist zu entnehmen, dass Substrate mit einer engen Größenverteilung überraschenderweise die Bereitstellung von Perlglanzpigmenten mit besonders hoher Farbreinheit und hohem Glanz ermöglichen.

Bei einer Ausführungsform der vorliegenden Erfindung weisen die erfindungsgemäßen wetterstabilen Perlglanzpigmente eine Summenhäufigkeitsverteilung einer volumengemittelten Größenverteilungsfunktion mit den Kennzahlen $D_{10}$, $D_{50}$ und $D_{90}$ auf, wobei diese Summenhäufigkeitsverteilung einen Span $\Delta D$ in einem Bereich von 0,7 - 1,4 aufweist. Der Span $\Delta D$ wird gemäß Formel (I) berechnet:

$$\Delta D = (D_{90} - D_{10}) / D_{50} \qquad (I)$$

Zur Charakterisierung der Teilchengrößenverteilung wird erfindungsgemäß der Span $\Delta D$ verwendet. Je kleiner der Span ist, desto enger ist die Teilchengrößenverteilung.

Bei besonders bevorzugten Ausführungsformen weisen die erfindungsgemäßen wetterstabilen Perlglanzpigmente einen Span $\Delta D$ in einem Bereich von 0,75 - 1,3, weiter bevorzugt in einem Bereich von 0,8 bis 1,2 und noch weiter bevorzugt in einem Bereich von 0,85 bis 1,1 auf.

Oberhalb eines Spans $\Delta D$ von 1,4 werden keine hinreichend farbreinen Perlglanzpigmente erhalten. Perlglanzpigmente unterhalb eines Spans der Größenverteilung von 0,7 können im Rahmen der üblichen Methoden nur sehr aufwendig und damit nicht mehr wirtschaftlich hergestellt werden.

Perlglanzpigmente mit den vorstehend bevorzugt aufgeführten Span $\Delta D$-Werten weisen hervorragende Farbreinheiten auf. Dies gilt insbesondere für Perlglanzpigmente, bei denen das Substrat eine mittlere Dicke von 500 bis 2000 nm, weiter bevorzugt von 500 bis 1200 nm aufweist.

Daher wirken diese Parameter der Größenverteilungsfunktion und vorzugsweise der mittleren Dicke der Perlglanzpigmentsubstrate in synergetischer Weise mit der erfindungsgemäßen Wetterstabilisierungsbeschichtung zusammen. Bei derart optisch hochwertigen Perlglanzpigmenten machen sich eben bereits kleine optische Verluste infolge unzureichender Stabilisierung einerseits oder einer zu dicken oder andernfalls optisch störenden Wetterstabilisierungsschicht (wie beispielsweis quellende Schichten) sehr störend bemerkbar.

Die erfindungsgemäßen wetterstabilen Perlglanzpigmente können eine beliebige mittlere Teilchengröße $D_{50}$ aufweisen. Die $D_{50}$-Werte der erfindungsgemäßen Pigmente liegen vorzugsweise in einem Bereich von 3 bis 80 $\mu$m. Bevorzugt weisen die erfindungsgemäßen Pigmente einen $D_{50}$-Wert aus einem Bereich von 5 bis 63 $\mu$m, besonders bevorzugt aus einem Bereich von 7 bis 56 $\mu$m und ganz besonders bevorzugt aus einem Bereich von 9 bis 40 $\mu$m auf.

Die $D_{10}$-Werte der erfindungsgemäßen Pigmente liegen vorzugsweise in einem Bereich von 1 bis 25 $\mu$m. Bevorzugt weisen die erfindungsgemäßen Pigmente einen $D_{10}$-Wert aus einem Bereich von 2 bis 21 $\mu$m, besonders bevorzugt aus einem Bereich von 3 bis 18 $\mu$m und ganz besonders bevorzugt aus einem Bereich von 4 bis 14 $\mu$m auf.

Die $D_{90}$-Werte der erfindungsgemäßen Pigmente liegen vorzugsweise in einem Bereich von 6 bis 250 $\mu$m.

Bevorzugt weisen die erfindungsgemäßen Pigmente einen $D_{90}$-Wert aus einem Bereich von 15 bis 210 µm auf.

Der $D_{10}$-, $D_{50}$- bzw. $D_{90}$-Wert der Summenhäufigkeitsverteilung der volumengemittelten Größenverteilungsfunktion, wie sie durch Laserbeugungsmethoden erhalten wird, gibt an, dass 10 %, 50 % bzw. 90 % der erfindungsgemäßen Pigmente einen Durchmesser aufweisen, der gleich oder kleiner als der jeweils angegebene Wert ist. Hierbei wird die Größenverteilungskurve der Pigmente mit einem Gerät der Fa. Malvern (Gerät: MALVERN Mastersizer 2000) gemäß Herstellerangaben bestimmt. Die Auswertung der Streulichtsignale erfolgte dabei nach der Fraunhofer Methode.

Die mittlere Dicke der zu beschichtenden plättchenförmigen synthetischen Substrate liegt vorzugsweise in einem Bereich von 50 nm bis 5000 nm, bevorzugt in einem Bereich von 60 nm bis 3000 nm und besonders bevorzugt in einem Bereich von 70 nm bis 2000 nm.

Bei einer Ausführungsform der Erfindung liegt die mittlere Dicke für Glasplättchen als zu beschichtendem plättchenförmigen Substrat vorzugsweise in einem Bereich von 750 nm bis 1500 nm. Derartige Glasplättchen sind kommerziell auf breiter Basis verfügbar. Weitere Vorteile bieten dünnere Glasplättchen. Dünnere Substrate führen zu einer geringeren Gesamtschichtdicke der erfindungsgemäßen Pigmente. So sind erfindungsgemäß ebenfalls bevorzugt Glasplättchen, deren mittlere Dicke in einem Bereich von 100 nm bis 700 nm, weiter bevorzugt in einem Bereich von 150 nm bis 600 nm, besonders bevorzugt in einem Bereich von 170 nm bis 500 nm und ganz besonders bevorzugt in einem Bereich von 200 nm bis 400 nm liegt.

Bei einer weiteren Ausführungsform liegt die mittlere Dicke für synthetischen Glimmer als zu beschichtendem plättchenförmigen Substrat bevorzugt in einem Bereich von 100 nm bis 700 nm, weiter bevorzugt in einem Bereich von 120 nm bis 600 nm, besonders bevorzugt in einem Bereich von 140 nm bis 500 nm und ganz besonders bevorzugt in einem Bereich von 150 nm bis 450 nm.

Beschichtet man plättchenförmige synthetische Substrate unterhalb einer mittleren Dicke von 50 nm mit beispielsweise hochbrechenden Metalloxiden, so werden extrem bruchempfindliche Pigmente erhalten, die schon beim Einarbeiten in ein Anwendungsmedium zerbrechen können, was wiederum eine signifikante Herabsetzung des Glanzes bedingt. Zudem dauern die Beschichtungszeiten dieser dünnen Substrate mit beispielsweise hochbrechenden Metalloxiden aufgrund der hohen spezifischen Oberflächen, d. h. der Oberfläche pro Gewichtseinheit Pigment, dieser plättchenförmigen synthetischen Substrate sehr lange, was hohe Herstellkosten verursacht. Oberhalb einer mittleren Substratdicke von 5000 nm können die Pigmente insgesamt zu dick werden. Damit kann eine schlechtere spezifische Deckfähigkeit, d. h. abgedeckte Fläche pro Gewichtseinheit an erfindungsgemäßem Pigment, sowie eine geringere planparallele Orientierung in einem Anwendungsmedium verbunden sein. Aus einer schlechteren Orientierung wiederum resultiert ein verminderter Glanz.

Bei einer bevorzugten Ausführungsform beträgt die Standardabweichung der Dicke der künstlichen Substrate 15 % bis 100 %, besonders bevorzugt 20 bis 70 % und ganz besonders bevorzugt 22 bis 40 %.

Unterhalb einer Standardabweichung von 15 % werden farbflopende Effektpigmente erhalten. Oberhalb einer Standardabweichung von 100 % sind derart viele dickere Pigmente in dem gesamten Pigmentensemble enthalten, dass es dann zu schlechterer Orientierung und damit zu Glanzverlusten kommt.

Die mittlere Dicke wird anhand eines gehärteten Lackfilmes, in dem die Effektpigmente im Wesentlichen planparallel zum Untergrund ausgerichtet sind, bestimmt. Hierzu wird ein Querschliff des gehärteten Lackfilmes unter einem Rasterelektronenmikroskop (REM) untersucht, wobei die Dicke von mindestens 100 Perlglanzpigmenten bestimmt und statistisch gemittelt wird.

Die erfindungsgemäß verwendeten plättchenförmigen Substrate können beschichtete oder unbeschichtete plättchenförmige Substrate sein. Beispielsweise können auf den plättchenförmigen Substraten auch niedrigbrechende Schichten, beispielsweise in Form von $Al_2O_3$ und/oder $SiO_2$ aufgebracht sein. Bevorzugt ist jedoch als äußerste Schicht eine hochbrechende Schicht aufgebracht. Auf dem plättchenförmigen Substrat kann auch eine äußerst dünne Schicht aus $SnO_2$ aufgebracht sein, die eine Rutilisierung einer nachfolgend aufgebrachten $TiO_2$-Schicht bewirkt. Unter einer Rutilisierung ist zu verstehen, dass aufgebrachtes $TiO_2$ nicht in der Anatasstruktur vorliegt, sondern die Bildung der Rutilstruktur induziert wird. Die Rutilstruktur kann aber auch durch gemeinsames Aufbringen von $SnO_2$ und $TiO_2$ bewirkt werden, so dass eine separate $SnO_2$-Schicht nicht zwingend erforderlich ist, um eine $TiO_2$-Schicht mit Rutilstruktur aufzubringen.

Gemäß einer bevorzugten Variante der Erfindung werden unbeschichtete plättchenförmige Substrate verwendet.

Die plättchenförmige Substrate werden mit wenigstens einer hochbrechenden Metalloxidschicht beschichtet, um den üblichen, auf Interferenz basierenden, Perlglanzeffekt zu erhalten. Im Rahmen dieser Erfindung wird unter einer hochbrechenden Metalloxidschicht eine Schicht mit einem Brechungsindex > 1,8, bevorzugt > 2,0 verstanden.

Vorzugsweise enthält oder besteht die wenigstens eine hochbrechende Schicht aus Metalloxiden, Metallhydroxiden und/oder Metalloxidhydraten, die aus der Gruppe, die aus $TiO_2$, $Fe_2O_3$, $Fe_3O_4$, $TiFe_2O_5$, $Fe_2Ti_3O_9$, $FeTiO_3$, ZnO, $SnO_2$, CoO, $Co_3O_4$, $ZrO_2$, $Cr_2O_3$ $VO_2$, $V_2O_3$, $(Sn,Sb)O_2$ und Mischungen davon besteht, ausgewählt werden.

Besonders bevorzugt enthält oder besteht die wenigstens eine hochbrechende Schicht aus Metalloxiden, Metallhydroxiden und/oder Metalloxidyhdraten, die aus der Gruppe, die aus $TiO_2$, $Fe_2O_3$, $Fe_3O_4$, $TiFe_2O_5$, $Fe_2Ti_3O_9$, $FeTiO_3$

und Mischungen davon besteht, ausgewählt werden.

Bei besonders bevorzugten Ausführungsformen ist das Substrat mit nur einer (Zahl: 1) hochbrechenden Metalloxidschicht, die vorzugsweise aus der Gruppe, die aus $TiO_2$, $Fe_2O_3$, $TiFe_2O_5$, $Fe_2Ti_3O_9$, $FeTiO_3$ und Mischungen davon besteht, ausgewählt wird, beschichtet.

Bei einer ganz besonders bevorzugten Ausführungsformen ist das Substrat mit nur einer (Zahl: 1) hochbrechenden Metalloxidschicht, die aus $TiO_2$ in der Rutilmodifikation besteht, beschichtet. Unter Rutilmodifikation (oder Rutil-$TiO_2$) wird im Sinne dieser Erfindung verstanden, dass mindestens 99 Gew.-% des $TiO_2$ als Rutil vorliegen, wobei sich die Angabe in Gew.-% auf den gesamten $TiO_2$-Gehalt in der jeweiligen Schicht bezieht.

Bei einer weiteren, besonders bevorzugten Ausführungsform umfasst die farbgebende hochbrechende Beschichtung Rutil-$TiO_2$, d. h. $TiO_2$ in der Rutilmodifikation, in einer Menge aus einem Bereich von 30 bis 80 Gew.-%, bezogen auf das Gesamtgewicht des Perlglanzpigments. In diesem Bereich liegen typischerweise die besonders intensiven Interferenzfarbtöne der dritten Ordnung. Weiter bevorzugt liegt der Anteil der Rutil-$TiO_2$ Beschichtung in einem Bereich von 40 - 70 Gew.-% , noch weiter bevorzugt in einem Bereich von 45 - 60 Gew.-%, jeweils bezogen auf das Gesamtgewicht des Perlglanzpigments.

Derartige Mengenanteile an Rutil-$TiO_2$ entsprechen, im einzelnen abhängig von der Feinheit und damit von der spezifischen Oberfläche des plättchenförmigen Substrats, einer bevorzugten mittleren Dicke der Rutil-$TiO_2$-Schicht aus einem Bereich von 80 - 280 nm. Besonders bevorzugt liegt die mittlere Dicke der Rutil-$TiO_2$-Schicht in einem Bereich von 100 bis 270 nm.

Bei diesen Schichtdicken wird in der Regel eine Interferenzfarbe der dritten Ordnung erhalten. Aufgrund der hohen Schichtdicke der Rutil-$TiO_2$-Schicht weisen die Pigmente eine besonders hohe photokatalytische Aktivität auf. Dementsprechend tritt sehr leicht eine unerwünschte Verfärbung einer $TiO_2$-haltige Pigmente enthaltenden Farb- oder Lackschicht bei Einwirkung von UV-Strahlung ein.

Bei weiteren Ausführungsformen der erfindungsgemäßen Perlglanzpigmente sind hochbrechende Schichten auf dem Substrat in Form einer Multilayerschichtfolge aufgebracht. Hierunter versteht man eine alternierende Schichtfolge hochbrechend, niedrigbrechend und hochbrechend auf dem Substrat. Auch hier ist $TiO_2$ und insbesondere Rutil-$TiO_2$ als hochbrechende Schicht bevorzugt.

Gemäß einer bevorzugten Variante der Erfindung ist die wenigstens eine aufgebrachte hochbrechende Metalloxidschicht calciniert. Mithin können die mit wenigstens einer hochbrechenden Schicht versehen plättchenförmigen Substrate calciniert sein.

Eine etwaige Calcinierung ist jedoch bevorzugt vor Aufbringung der erfindungsgemäß zu verwendenden Deckschicht durchzuführen.

Eine erfindungsgemäß zu verwendende Deckschicht weist eine Schichtstruktur auf, bei der auf dem plättchenförmigen Substrat zunächst eine Schicht aus oder mit, vorzugsweise aus, Zinnoxid, vorzugsweise $SnO_2$, und/oder Zinnhydroxid und/oder Zinnoxidhydrat und danach eine Schicht aus oder mit, vorzugsweise aus, Cer-oxid und/oder Cerhydroxid und/oder Ceroxidhydrat aufgebracht ist. Mithin weist die erfindungsgemäß zu verwendende Deckschicht eine Unterstruktur aus wenigstens zwei, vorzugsweise aus zwei, Schichten auf.

Völlig überraschend wurde mit dieser Schichtfolge ein synergetisch wirkender Schichtaufbau mit einer sehr hohen Wirksamkeit und Effektivität hinsichtlich der mit einer Wetterstabilität verbundenen Eigenschaften wie Schwitzwasserbeständigkeit, gutem Quellungsverhalten und einer hohen UV-Stabilität gefunden.

Die Wirksamkeit ist dieser beiden Oxidschichten ist weitaus höher als im Vergleich dazu Beschichtungen mit einer Deckschicht aus nur einer der beiden Oxidschichten. Andererseits ist es nicht nötig und sogar nachteilig einen dreischichtigen Aufbau mit einer äußeren $SiO_2$-Schicht, wie in der EP 1 682 622 B1 beschrieben, zu verwenden.

Die Zinnoxid-haltige Schicht umfasst oder besteht aus Zinnoxid, vorzugsweise $SnO_2$, Zinnhydroxid und/oder Zinnoxidhydrat. Vorzugsweise besteht die Zinnoxid-haltige Schicht aus Zinnoxid, vorzugsweise $SnO_2$, Zinnhydroxid und/oder Zinnoxidhydrat. Erfindungsgemäß wird unter einer Zinnoxidschicht verstanden, dass diese Schicht neben Zinnoxid auch Zinnhydroxid und/oder Zinnoxidhydrat enthalten kann.

Die Menge an Zinnoxid, vorzugsweise $SnO_2$, Zinnhydroxid und/oder Zinnoxidhydrat in der Deckschicht liegt, jeweils berechnet als $SnO_2$, erfindungsgemäß bevorzugt in einem Bereich von 0,4 bis 4,0 Gew.-%, bezogen auf das Gesamtgewicht des Perlglanzpigments. Besonders bevorzugt liegt die Menge an Zinnoxid, Zinnhydroxid und/oder Zinnoxidhydrat, berechnet als $SnO_2$, in einem Bereich von 1,0 bis 3,0 Gew.-% und ganz besonders bevorzugt in einem Bereich von 1,2 bis 2,5 Gew.-%, jeweils bezogen auf das Gesamtgewicht des Perlglanzpigments.

Unterhalb von 0,4 Gew.-% ist die Wirksamkeit hinsichtlich der nötigen UV-Stabilisierung zu gering. Oberhalb von 4,0 Gew.-% wird die Interferenzfarbe durch die sich ausbildende Zinnoxid-, Zinnhydroxid- und/oder Zinnoxidhydrat-Schicht merklich verändert, was im Interesse einer einfachen Produktionsführung nicht erwünscht ist.

Vorzugsweise liegt das Zinnoxid als $SnO_2$ vor. Durch Trocknen von Zinnhydroxid bzw. Zinnoxidhydrat entsteht Zinnoxid.

Der Anteil von $SnO_2$ kann wird beispielsweise mittels Röntgenfluoreszenzanalyse (RFA) bestimmt. Hierzu werden die Pigmente mit Lithiumtetraborat versetzt, in oxidierender Atmosphäre geschmolzen und als homogene

Glastablette vermessen. Als Messgerät dient bevorzugt das Gerät Advantix ARL, Fa. Thermo Scientific. Um ggf. den Anteil von $SnO_2$ in der Deckschicht von jenem in einer Rutil-TiO-Schicht zu unterscheiden bietet sich zudem XPS oder Augerspektroskopie in Kombination mit Sputtern an. Hierdurch wird zusätzlich ein Tiefenprofil der Elemente der Oberflächenbeschichtung erhalten.

Die Cer-haltige Schicht umfasst oder besteht aus Ceroxid und/oder Cerhydroxid und/oder Ceroxidhydrat. Vorzugsweise besteht die Cer-haltige Schicht aus Ceroxid und/oder Cerhydroxid und/oder Ceroxidhydrat. Erfindungsgemäß wird unter einer Ceroxidschicht verstanden, dass diese Schicht neben Ceroxid auch Cerhydroxid und/oder Ceroxidhydrat enthalten kann.

Ceroxid entsteht nach Trocknen der Pigmente bei erhöhter Temperatur.

Es hat sich überraschenderweise gezeigt, dass die Cer-haltige Schicht schon in sehr geringen Mengen in Kombination mit Zinnoxid-Schicht bereits einen ausreichenden UV-Schutz ermöglicht, obwohl in der vorliegenden Erfindung auf eine weitere Schutzschicht verzichtet wird.

Bei bevorzugten Ausführungsformen liegt die Menge der Cer-haltigen Schicht, berechnet als elementares Cer, in einem Bereich von 0,1 bis 1,5 Gew.-%, bezogen auf das Gesamtgewicht des Perlglanzpigments. Dabei wird die Menge der Cer-haltigen Schicht auf elementares Cer umgerechnet. Hieraus kann auch leicht auf einen Gehalt an $Ce_2O_3$ umgerechnet werden, wobei es sich hier um eine Rechengröße handelt, die nicht notwendigerweise bedeutet, dass die Cer-haltige Verbindung tatsächlich teilweise oder vollständig als $Ce_2O_3$ vorliegt.

Der Gewichtsanteil an Ceroxid, sollte, berechnet als elementares Cer und bezogen auf die eingesetzte Menge an Perlglanzpigment, vorzugsweise nicht über 1,5 Gew.-% liegen, da andernfalls Verluste der optischen Qualität des Pigmentes zu stark sein könnten. Außerdem macht sich bei Mengen über 1,5 Gew.-% ein störender Gelbstich bemerkbar. Dieser Gelbstich ist bei der vorliegenden Erfindung deshalb so auffallend, weil die erfindungsgemäßen Perlglanzpigmente optisch sehr hochwertige Eigenschaften aufweisen und schon kleine Beeinträchtigungen sehr störend wirken. Unterhalb eines Gewichtsanteils von 0,1 Gew.-% wiederum ist die zusätzliche UV-Stabilisierung in der Regel nicht ausgeprägt genug. Im Einzelfall hängt der Gewichtsanteil von der Feinheit und damit einhergehend von der spezifischen Oberfläche des Perlglanzpigmentes sowie von der Schichtdicke der Metalloxidschicht, vorzugsweise $TiO_2$-Schicht, ab. Feinere Pigmente und dickere $TiO_2$-Schichten erfordern im Allgemeinen auch einen höheren Gehalt an Ceroxid und/oder Cerhydroxid und/oder Ceroxidhydrat.

Bei besonders bevorzugten Ausführungsformen liegt die Menge der Cer-haltigen Schicht, berechnet als elementares Cer, in einem Bereich von 0,2 bis 1,0 Gew.-%, weiter bevorzugt in einem Bereich von 0,35 bis 0,9 Gew.-%, jeweils bezogen auf das Gesamtgewicht des Perlglanzpigments.

Der Ceroxidgehalt der Cer-haltigen Schicht wird ebenfalls beispielsweise mittels Röntgenfluoreszenzanalyse (RFA) bestimmt. Eine weitere Methode zur Bestimmung des Ceroxidgehalts in der Deckschicht ist XPS. Bei dieser Methode kann in Kombination mit Sputtern zusätzlich ein Tiefenprofil der Elemente der Oberflächenbeschichtung erhalten werden. Bevorzugt wird der Cergehalt der Cer-haltigen Schicht mittels Röntgenfluoreszenzanalyse ermittelt.

Bei äußerst bevorzugten Ausführungsformen erfolgt die Beschichtung der Perlglanzpigmente mit der Cer-haltigen Schutzschicht in wässrigem Milieu. Es wird vermutet, dass sich hierbei - im Gegensatz zu der in der EP 1 682 622 B1 beschriebenen Route der Abscheidung aus organischen Lösemitteln - eine besser strukturierte, gleichmäßigere Schutzschicht ausbildet. Daher scheint man auch nur sehr wenig Material zu benötigen, um eine ausreichende UV- und Wetterstabilität zu erhalten.

Der Anteil der Deckschicht am gesamten Perlglanzpigment liegt bevorzugt in einem Bereich von 1,0 bis 5,0 Gew.-%, bezogen auf das Gesamtgewicht des Perlglanzpigments. Besonders bevorzugt liegt der Anteil der Deckschicht in einem Bereich von 2,0 bis 4,0 Gew.-%, bezogen auf das Gesamtgewicht des Perlglanzpigments.

Es ist weiter bevorzugt, dass das Gewichtsverhältnis von Zinnoxid, berechnet als $SnO_2$, zu Cer, berechnet als elementares Cer, in der Deckschicht in einem Bereich von 2 bis 10 liegt. Besonders bevorzugt liegt das Gewichtsverhältnis von Zinnoxid, berechnet als $SnO_2$, zu Cer, berechnet als elementares Cer, in der Deckschicht in einem Bereich von 2,5 bis 9 und ganz besonders bevorzugt in einem Bereich von 3 bis 7.

Unterhalb eines Verhältnisses von 2,0 wird der Anteil an Ceroxid zu hoch und damit tritt eine unerwünschte potentielle Farbveränderung ein. Oberhalb eines Verhältnisses von 10 ist zu wenig Ceroxid vorhanden, um die synergetische Wirkung dieser beiden Schichten entstehen zu lassen. Zudem wird Zinnoxid, vorzugsweise $SnO_2$, in ausreichenden Mengen benötigt, um die gewünschte Wetterstabilität zu bewirken. Zu hohe Mengen Zinnoxid führen zu einer unerwünschten Verschiebung der Interferenzfarbe.

Die oligomeren Silane sind bevorzugt wasserbasierende oligomere Silane, welche aus den EP 0 675 128, EP 0 716 127 und EP 0 716 128 bekannt sind. Eine Verwendung als organische Kompatibilisierungsschicht bei wetterstabilen Perlglanzpigmenten ist aus der EP 0 888 410 B1 bekannt. Diese Kompatibilisierungsschicht bewirkt eine hervorragende Verträglichkeit mit dem Applikationssystem, üblicherweise dem Bindemittel einer Farbe oder einem Lack.

Diese wasserbasierenden, oligomeren Silane enthalten mindestens eine Art von funktionellen Gruppen. Unter einer funktionellen Bindungsgruppe ist im Rahmen dieser Erfindung eine funktionelle Gruppe zu verstehen, die eine chemische Wechselwirkung zum Bindemittel einzugehen vermag. Die chemische Wechselwirkung kann dabei aus einer

kovalenten Bindung, einer Wasserstoffbrückenbindung oder einer ionischen Wechselwirkung bestehen. Erfindungsgemäß ist zumindest eine Aminogruppe als funktionelle Gruppe vorhanden. Weiterhin sind in den wasserbasierenden oligomeren Silanen hydrophobe Silananteile, bevorzugt Alkylsilananteile, die mit den Silanen enthaltend funktionelle Gruppen kovalent über Siloxanbindungen verknüpft sind, enthalten.

Die Wahl einer geeigneten funktionellen Gruppe hängt von der chemischen Natur des Bindemittels ab. Bevorzugt wählt man eine den Funktionalitäten des Bindemittels chemisch kompatible funktionelle Gruppe, um eine gute Anbindung zu ermöglichen. Diese Eigenschaft ist im Hinblick auf wetterstabile und UV-stabile Perlglanzpigmente sehr wichtig, da auf diese Weise eine genügend große Haftfestigkeit zwischen Pigment und ausgehärtetem Bindemittel gegeben ist. Dies ist beispielsweise in Haftprüfungstests wie dem Gitterschnitttest bei Schwitzwassertestbelastungen gemäß der DIN 50 017 nachzuprüfen. Das Bestehen eines derartigen Testes stellt eine notwendige Bedingung für die Verwendung von wetterstabilen Perlglanzpigmenten im Automobillack dar.

Die erfindungsgemäß zu verwendenden oligomeren Silane enthalten zwingend Aminogruppen als funktionelle Gruppe. Die Aminofunktion ist eine funktionelle Gruppe, die mit den meisten in Bindemitteln vorhandenen Gruppen eine oder mehrere chemische Wechselwirkungen eingehen kann. Dies kann eine kovalente Bindung, wie z. B. mit Isocyanat- oder Carboxylatfunktionen des Bindemittels, oder Wasserstoffbrückenbindungen wie mit OH- oder COOR-Funktionen oder auch ionische Wechselwirkungen beinhalten. Eine Aminofunktion ist daher für den Zweck der chemischen Anbindung des Perlglanzpigmentes an verschiedenartige Bindemittel sehr gut geeignet.

Bei weiter bevorzugten Ausführungsformen weisen die oligomeren Silane Alkylgruppen von 1 bis 18 C-Atomen auf. Durch die Alkylgruppen wird die Pigmentoberfläche teilweise hydrophobiert, was eine Abstoßung von Wasser und eine bessere planparallele Orientierung im Anwendungsmedium ermöglicht. Weiter bevorzugt enthalten die wasserbasierenden, oligomeren Silane Alkylgruppen von 1 bis 8 C-Atomen und besonders bevorzugt von 2 bis 6 C-Atomen, noch weiter bevorzugt von 3 bis 4 C-Atomen.

Die Alkylgruppen können dabei linear, verzweigt und gegebenenfalls ringförmig sein.

Die wasserbasierenden, oligomeren Silane werden bevorzugt durch

- Mischen wasserlöslicher Aminoalkylalkoxysilane der allgemeinen Formel II

  $$R\text{-}Si\text{-}(R^1)_y(OR^{1*})_{3-y}, \qquad (II)$$

  vorzugsweise Aminopropyltriethoxysilan, Aminopropylmethyldiethoxysilan, Aminopropyltrimethoxysilan oder Aminopropylmethyldimethoxysilan, mit nicht wasserlöslichen Alkyltrialkoxysilanen der allgemeinen Formel IIIa

  $$R^2\text{-}Si(OR^{1**})_3 \qquad (IIIa)$$

  vorzugsweise Propyltrimethoxysilan, Propyltriethoxysilan, Methyltriethoxysilan, Methyltrimethoxysilan, Ethyltrimethoxysilan, Ethyltriethoxysilan, Isobutyltrimethoxysilan oder Isobutyltriethoxysilan, und/oder nicht wasserlöslichen Dialkyldialkoxysilanen der allgemeinen Formel IV

  $$AA'\text{-}Si(OR^{1***})_2 \qquad (IV)$$

  vorzugsweise Dimethyldimethoxysilan, Dimethyldiethoxysilan, Methylpropyldimethoxysilan oder Methylpropyldiethoxysilan, und/oder Mischungen aus nicht wasserlöslichen Alkyltrialkoxysilanen und Dialkyldialkoxysilanen der allgemeinen Formeln III und IV,
  wobei R eine aminofunktionelle organische Gruppe ist,
  $R^1$, $R^{1*}$, $R^{1**}$ und $R^{1***}$ unabhängig voneinander einen Methyl- oder Ethyl-Rest, $R^2$ einen linearen oder cyclischen oder verzweigten Alkyl-Rest mit 1 bis 8 C-Atomen,
  A einen unverzweigten oder verzweigten Alkyl-Rest mit 1 bis 3 C-Atomen und
  A' einen unverzweigten oder verzweigten Alkyl-Rest mit 1 bis 3 C-Atomen darstellen und $0 < y \leq 1$ ist,
- Versetzen des Gemisches mit Wasser und
- Einstellen des pH-Wertes der Reaktionsmischung auf einen Wert zwischen 1 und 8 und
- Entfernen des bereits vorhandenen und/oder bei der Umsetzung entstandenen Alkohols hergestellt.

Das oligomere Silan ist weiterhin herstellbar durch

- Mischen von Q Molen wasserlöslicher Aminoalkylalkoxysilane der allgemeinen Formel II $R\text{-}Si(R^1)_y(OR^{1*})_{3-y}$ vorzugsweise Aminopropyltriethoxysilan, Aminopropylmethyldiethoxysilan, Aminopropyltrimethoxysilan oder Aminopropylmethyldimethoxysilan, mit M Molen nicht wasserlöslicher Alkylalkoxysilane der allgemeinen Formel IIIb

$R^3\text{-}Si(OR^{1**})_3$ (IIIb)

wobei R eine aminofunktionelle organische Gruppe ist,
$R^1$, $R^{1*}$ und $R^{1**}$ einen Methyl- oder Ethyl-Rest und
$R^3$ einen linearen oder cyclischen oder verzweigten Alkylrest mit 1 bis 6 C-Atomen oder eine Ureido-Alkylgruppe der allgemeinen Formel V

$NH_2\text{-}CO\text{-}NH\text{-}(CH_2)_b\text{-}$, mit $1 < b < 6$ (V)

vorzugsweise b = 3, darstellt und $0 < y \leq 1$ ist, in dem molaren Verhältnis $0 < M/Q \leq 2$,
- Versetzen des Gemisches mit Wasser,
- Einstellen des pH-Wertes der Reaktionsmischung auf einen Wert zwischen 1 und 8 und
- optional Entfernen des bereits vorhandenen und/ oder bei der Umsetzung entstandenen Alkohols.

Ferner ist das oligomere Silan erhältlich durch

- Mischen wasserlöslicher Organosilane der allgemeinen Formel VI

$H_2N(CH_2)_f(NH)_g(CH_2)_i\text{-}Si(CH_3)_h(OR^0)_{3-h}$ (VI)

worin $0 \leq f \leq 6$, g = 0 falls f = 0, g = 1 falls f > 1, und worin $0 \leq i \leq 6$ und $0 \leq h \leq 1$ und $R^0$ eine Methyl-, Ethyl-, Propyl- oder Isopropyl-Gruppe sind, vorzugsweise Aminopropyltriethoxysilan, mit wasserlöslichen, jedoch in wässrigem Medium nicht stabilen Organosilanen der allgemeinen Formel VII

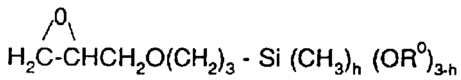

(VII)

worin $0 < h \leq 1$ ist und $R^0$ einen Methyl-, Ethyl-, Propyl- oder Isopropyl-Rest darstellt, vorzugsweise Glycidyloxypropyltrimethoxysilan, und/ oder der allgemeinen Formel VIII

$H_2C{=}CR'\text{-}COO(CH_2)_3\text{-}Si(CH_3)_h(OR^0)_{3-h}$ (VIII)

worin $0 \leq h \leq 1$ ist, $R^0$ einen Methyl-, Ethyl-, Propyl- oder Isopropyl-Rest und R' einen Methyl-oder Wasserstoff-Rest darstellen, vorzugsweise Methacryloxypropyltrimethoxysilan, und ein nicht wasserlösliches Organosilan der allgemeinen Formel IX

$R''\text{-}Si(CH_3)_h(OR^0)_{3-h}$ (IX)

worin $0 \leq h \leq 1$ ist, $R^0$ einen Methyl-, Ethyl-, Propyl- oder Isopropyl-Rest und R" einen linearen, verzweigten oder cyclischen Kohlenwasserstoff-Rest mit 1 bis 8 C-Atomen darstellen, vorzugsweise Propyltrimethoxysilan,
in dem molaren Verhältnis $M = a / (b + c + d)$, wobei a die Summe der Molzahlen der Organosilane gemäß Formel VI, b die Summe der Molzahlen der Organosilane gemäß Formel VII sowie c die Summe der Molzahlen der Organosilane gemäß Formel VIII und d die Summe der Molzahlen der Organosilane gemäß Formel IX sind, mit $0 \leq M \leq 3$, insbesondere für M gleich 0 mit a gleich 0 und/oder c gleich d gleich 0 und $b \geq 1$ sowie vorzugsweise $0 \leq M \leq 3$,
- Versetzen des Gemisches mit einem Wasser/Säure-Gemisch,
- Einstellen des pH-Wertes der Reaktionsmischung auf einen Wert zwischen 1 und 8 und
- optional Entfernen des bereits vorhandenen und/oder bei der Umsetzung entstandenen Alkohols.

Bevorzugt gibt man während der destillativen Abtrennung des Alkohols Wasser in dem Maße zu, wie Alkohol bzw. Alkohol/ Wasser-Gemisch aus dem Reaktionsmedium entfernt wird. Zum Einstellen des pH-Wertes sind einbasige Säuren besonders geeignet. So hergestellte Produkte setzen auch bei Verdünnen mit Wasser keine weiteren Alkohole durch Hydrolyse frei und weisen einen Flammpunkt von deutlich mehr als 70° C auf.

Die wasserbasierenden oligomeren Silane binden offensichtlich hervorragend an die Cer-haltige Schicht an, und daher wird im Gegensatz zum Stand der Technik hierzu keine weitere Metalloxidschicht in der Deckschicht benötigt. Durch den geringen Zinnoxid- und Ceroxidgehalt werden die optischen Eigenschaften des erfindungsgemäßen Perlglanzpigments nicht beeinträchtigt. Mithilfe der wasserbasierenden oligomeren Silansysteme lassen sich auch in Wasser

nicht oder schwer lösliche Gruppen, wie beispielsweise Alkylgruppen von Silanen, problemlos auf die Oberfläche der Perlglanzpigmente anbinden.

Die erhaltenen wasserbasierenden oligomeren Silane, d.h. organopolysiloxan-haltige Zusammensetzungen auf Wasserbasis, sind im Wesentlichen frei von organischen Lösemitteln und besitzen einen Flammpunkt von mehr als 70°C. Da durch die Mischung mit Wasser die Alkoxygruppen bereits im Wesentlichen hydrolysiert wurden, werden beim Verdünnen mit Wasser weniger als 5 Gew.-% Alkohole, beispielsweise Methanol und/oder Ethanol, durch Hydrolyse freigesetzt. Es resultieren beispielsweise Verbindungen mit folgender Näherungsstruktur (Formel X)

$$[HO[Si(A)(OH)_Z(CH_3)_{1-Z}O]_a[Si(B)(OH)_Y(CH_3)_{1-Y}O]_b[Si(C)(OH)_W(CH_3)_{1-W}O]_c[Si(D)(OH)_V\ (CH_3)_{1-V}O]_d[H\cdot(HX)]_e \quad (X)$$

wobei

A = Aminoalkylrest abgeleitet aus der allgemeinen Formel VI,
B = Glycidetheralkylrest abgeleitet der allgemeinen Formel VII,
C = Acryloxyalkyl-oder Methacryloxyalkylrest der allgemeinen Formel VIII,
D = Alkylrest der allgemeinen Formel IX,
HX = einbasige Säure, wobei X = anorganischer oder organischer Säurerest, wie z.B. Chlorid, Nitrat, Formiat, Acetat,
v gleich 0 oder 1 und w gleich 0 oder 1 und y gleich 0 oder 1 und z gleich 0 oder 1 und $a + b + c + d \geq 4$ und $a \leq e \leq 2a$ sind, mit $0 < a / (b + c + d) \leq 3$, sowie für $0{,}5 \leq a / (b + c + d) \leq 3$.

Aufgabe der siliziumfunktionellen Hydroxylgruppen ist es, chemische Bindungen zu den Hydroxylgruppen der Cer-haltigen Schicht auf der Perlglanzpigmentoberfläche auszubilden. Dadurch wird ein stabiler Verbund zwischen Silan und Pigmentoberfläche aufgebaut.

Die organofunktionellen Gruppen des oligomeren Silans haben die Aufgabe, Bindungen zum Polymer des Applikationssystems, beispielsweise eines Wasserlackes, herzustellen. Da die Oligomeren mit mehreren, sich voneinander unterscheidenden funktionellen Gruppen ausgerüstet werden können, kann das Pigment in unterschiedlichen Wasserlacksystemen verwendet werden. Eine Ausrüstung mit Methacryl- und Aminogruppen bedeutet zum Beispiel, dass das Pigment für Wasserlacksysteme mit Polyester als Polymer und für Wasserlacksysteme mit Polyurethan als Polymer einsetzbar ist.

Die erhaltenen wasserbasierenden oligomeren Silane, d.h. organopolysiloxan-haltige Zusammensetzungen auf Wasserbasis, sind vorteilhaft im Wesentlichen frei von organischen Lösemitteln und besitzen einen Flammpunkt von mehr als 70°C. Da durch die Mischung mit Wasser die Alkoxygruppen bereits im Wesentlichen hydrolysiert sind, werden beim Verdünnen mit Wasser weniger als 5 Gew.-% Alkohole, wie z. B. Methanol und/oder Ethanol, durch Hydrolyse freigesetzt.

Beispiele der wasserbasierenden oligomeren Silane sind wässriges, alkoholfreies Aminosilanhydrolysat (Dynasylan Hydrosil 1151), wässriges, alkoholfreies amino/alkylfunktionelles Siloxancooligomer (Dynasylan Hydrosil 2627), wässriges, alkoholfreies diamino/ alkylfunktionelles Siloxancooligomer (Dynasylan Hydrosil 2776), wässriges, alkoholfreies amino/ vinylfunktionelles Siloxancooligomer (Dynasylan Hydrosil 2907), wässriges, alkoholfreies amino/alkylfunktionelles Siloxancooligomer (Dynasylan Hydrosil 2909), wässriges, alkoholfreies amino/alkylfunktionelles Siloxancooligomer (Dynasylan Hydrosil 2909), Hydrosil 2926) oder wässriges, alkoholfreies amino/methacrylatfunktionelles Siloxancooligomer (Dynasylan Hydrosil 2929), oligomeres Diaminosilansystem (Dynasylan 1146).

Zusätzlich können weitere Silane Verwendung finden. Bevorzugt werden jedoch ausschließlich wasserbasierende oligomere Silane verwendet.

Die oligomere Silansysteme können in verhältnismäßig geringen Mengen verwendet werden, da sie sehr effektiv wirken. Man kann ihren Gehalt indirekt aus dem C-Gehalt des erfindungsgemäßen Perlglanzpigments bestimmen. Der C-Gehalt der erfindungsgemäßen Perlglanzpigmente liegt bevorzugt in einem Bereich von 0,03 bis 0,5 Gew.-% und besonders bevorzugt in einem Bereich von 0,1 bis 0,35 Gew.-%, jeweils bezogen auf das Gesamtgewicht des Perlglanzpigments.

Bestimmt werden kann der C-Wert beispielsweise mittels des Geräts CS- 200 (Lieferant: Lico Instrumente GmbH). Hier wird der C-Gehalt in Form von $CO_2$ nach einem kontrollierten Verbrennen der Pigmentprobe bestimmt.

Diese sehr geringen C-Gehalte lassen auf einen entsprechend geringen Anteil an oligomeren Silanen auf der Oberfläche der Perlglanzpigmente und mithin auf eine erstaunlich hohe Effektivität dieser Kompatilisierungsschicht schließen.

Es ist äußerst bevorzugt, dass die Beschichtung der Perlglanzpigmente mit der gesamten Deckschicht in wässrigem Milieu erfolgt ist.

Eine Beschichtung im wässrigen Milieu ist preisgünstiger als jene in organischem Medium und vermeidet das Problem der Entsorgung organischer Lösemittel.

Weiterhin wird die Aufgabe gemäß der vorliegenden Erfindung durch Bereitstellung eines Verfahrens zur Herstellung von wetterstabilem Perlglanzpigment nach einem der vorstehenden Ansprüche,
dadurch gekennzeichnet,
dass das Verfahren folgende Schritte umfasst:

a) Optional Klassieren von beschichteten oder unbeschichteten plättchenförmigen Substraten unter Erhalt von Substraten, welche vorzugsweise die Kennzahlen $D_{10}$, $D_{50}$, $D_{90}$ aus einer Summenhäufigkeitsverteilung einer volumengemittelten Größenverteilungsfunktion mit einem Span $\Delta D$ in einem Bereich von 0,7 - 1,4 aufweisen,
b) Suspendieren von beschichteten oder unbeschichteten plättchenförmigen Substraten, optional aus Schritt a), in wässriger Lösung und Beschichten der beschichteten oder unbeschichteten plättchenförmigen Substrate mit einem oder mehreren hochbrechenden Metalloxid(en) unter Erhalt von Perlglanzpigmenten, die optional calciniert werden,
c) Beschichten der in Schritt b) beschichteten Perlglanzpigmente in wässriger Lösung mit Zinnoxid, Zinnhydroxid und/oder Zinnoxidhydrat durch Hydrolyse eines Zinnsalzes oder einer hydrolysierbaren Zinn-metallorganischen Verbindung in einem pH-Bereich von 1,5 bis 3,0,
d) Beschichten der in Schritt c) beschichteten Perlglanzpigmente in wässriger Lösung mit Ceroxid, Cerhydroxid und/oder Ceroxidhydrat durch Hydrolyse eines Cer-salzes oder einer hydrolysierbaren Cer-metallorganischen Verbindung,
e) Beschichten der in Schritt d) beschichteten Perlglanzpigmente in wässriger Lösung mit oligomeren Silanen,
f) Abtrennen der in Schritt e) beschichteten Perlglanzpigmente, optional Waschen mit vollentsalztem Wasser, und
g) optional Trocknen, vorzugsweise bei einer Temperatur aus einem Bereich von 80° bis 160° C.

Zur Fällung der Zinnoxidschicht, vorzugsweise $SnO_2$-Schicht, wird bevorzugt bei einem pH-Wert in einem Bereich von 1,6 bis 2,5 und besonders bevorzugt von 1,7 bis 2,3 gearbeitet. Dabei wird der pH bevorzugt durch gleichzeitige Zugabe von Säure oder Lauge oder einem geeignetem Puffersystem konstant gehalten.

Die Reaktionstemperatur liegt bevorzugt in einem Bereich von 50 bis 95 °C und weiter besonders in einem Bereich von 65 bis 85 °C.
Geeignete Salze zur Fällung der Zinnoxidschicht, vorzugsweise $SnO_2$-Schicht, sind die Salze des vierwertigen Zinns, wie beispielsweise $SnCl_4$, $Sn(NO_3)_4$, $Sn(SO_4)_2$ oder $Sn(acetat)_4$.

Zur Fällung der Cer-haltigen Schicht, die Ceroxid und/oder Cerhydroxid und/oder Ceroxidhydrat umfasst oder daraus besteht, werden bevorzugt Salze oder hydrolysierbare Cer-metallorganischen Verbindungen wie Cer(III)acetat, Cer(III)acetylacetonat, Cer(III)nitrat, Cer(III)chlorid, Cer(III)sulfat oder Cer(IV)ammoniumnitrat verwendet. Die Fällung wird bei einer Temperatur aus einem Bereich von vorzugsweise 30 bis 100° C, noch weiter vorzugsweise 40 bis 75° C, durchgeführt. Der pH-Wert dieser Fällung liegt vorzugsweise in einem Bereich von 3 bis 7 und wird, sofern notwendig, durch gleichzeitige Zugabe von Säure oder Lauge oder einem geeignetem Puffersystem konstant gehalten.

Die Fällung oder Anbindung des wasserbasierenden oligomeren Silans auf bzw. an die Pigmentoberfläche erfolgt bevorzugt bei einer Temperatur aus einem Bereich von 75 bis 80° C und vorzugsweise bei einem pH-Wert aus einem Bereich von 5 bis 11.

Das Klassieren der Pigmentsubstrate kann durch geeignete Geräte wie Zentrifugen, Siebe, Dekanter oder Zyklone oder Sedimentationsaggregate erfolgen, wobei auch beliebige Kombinationen dieser Geräte und der damit einhergehenden Techniken möglich sind.

Der Einfluss der Beschichtung auf die optischen Eigenschaften von Perlglanzpigmenten wird insbesondere nach Schwitzwasserbelastung deutlich. In einem Basislack-/Klarlacksystem erlaubt der Schwitzwassertest außerdem eine Aussage zur Benetzung und Einbettung der Perlglanzpigmente in die Bindemittelmatrix. Nach Belastung unter exakt definierten Bedingungen im Schwitzwassertest gemäß DIN 50 017 (Kondenswasser-Konstantklimate) werden zum einen die Haftung mittels Gitterschnittest als auch die optischen Eigenschaften, wie Abbildungsschärfe (DOI: distinctness of image), Quellverhalten oder Glanz, im Vergleich zu einer unbelasteten Probe beurteilt.

Trotz Schwitzwasserbelastung werden die optischen Eigenschaften der erfindungsgemäßen Perlglanzpigmente nur unwesentlich beeinträchtigt. Auch im Gitterschnittest zeigen die erfindungsgemäßen Perlglanzpigmente überraschend gute Ergebnisse. Es hat sich gezeigt, dass der Einsatz eines oligomeren Silansystems auf der beschichteten Pigmentoberfläche ein Eindringen von Wasser oder Feuchtigkeit in die Beschichtung deutlich erschwert. Es wird angenommen, dass dies auf eine verbesserte Kombination von Silan-Vernetzungsgrad und Silan-Anbindungsgrad an die beschichtete Pigmentoberfläche zurückzuführen ist. Bei einem erfindungsgemäß einzusetzenden oligomeren Silansystem ist bereits aufgrund der Oligomerisierung ein erhöhter Silan-Vernetzungsgrad gegeben. Hierdurch wird eine homogene Oberflächenmodifizierung auf der beschichteten Pigmentoberfläche gewährleistet. Der Silan-Anbindungsgrad definiert die Bindungsstärke zwischen der beschichteten Pigmentoberfläche und dem erfindungsgemäß einzusetzenden oligomeren Silansystem.

Ein Vergleich der erfindungsgemäßen Perlglanzpigmente mit Perlglanzpigmenten, welche nur eine Cer-haltige Schicht aufweisen zeigt deutlich, dass letztere im Schwitzwassertest sowohl einen Verlust ihrer optischen Eigenschaften als auch im Gitterschnittest nicht die gewünschte Haftfestigkeit aufweisen. Überraschenderweise zeigen die erfindungsgemäßen Perlganzpigmente im Schwitzwassertest vergleichbare oder sogar bessere Ergebnisse als Perlglanzpigmente, welche sowohl eine Cer-haltige als auch eine $SiO_2$-Schicht, welche mit monomeren Silanen oberflächenmodifiziert wurde, im Schichtaufbau aufweisen.

Dass der Ersatz einer mit monomeren Silanen oberflächenmodifizierten $SiO_2$-Schicht durch ein oligomeres Silansystem zu keinem Verlust der Haftungs- und optischen Eigenschaften unter den Bedingungen des Schwitzwassertests führt, war nicht vorhersehbar. Im Hinblick auf aus dem Stand der Technik bekannte Pigmente, welche eine $SiO_2$-Schicht als zusätzliche Barriereschicht aufweisen, war es überraschend, dass auch ohne diese zusätzliche Barriereschicht wetterstabile Pigmente erhalten werden können. Neben einer Kosteneinsparung im Herstellungsprozess ist es äußerst vorteilhaft, dass durch Einsparung einer Schicht Perlglanzpigmente erhalten werden können, die die Anforderungen, wie z. B. Wetterstabilität erfüllen, und trotzdem die optischen Eigenschaften durch zusätzliche Schichten nur unwesentlich beeinflusst werden.

Oligomere Silansysteme besitzen gegenüber monomeren Silanen bzw. Mischungen aus monomeren Silanen den Vorteil, dass bei Verwendung der oligomeren Silansysteme eine vorvernetzte Zusammensetzung auf der beschichteten Pigmentoberfläche aufgebracht wird. Bei Verwendung monomerer Silane wird jedoch aufgrund der Konkurrenzsituation zwischen unterschiedlich reaktiven Silankomponenten und OH-Gruppen der beschichteten Pigmentoberflächen eine Beschichtung mit variablem Vernetzungsgrad aufgebracht. Beispielsweise kann nachgewiesen werden, dass der Silan-Vernetzungsgrad hochreaktiver monomerer Aminosilane wie Dynasylan AMEO auf der beschichteten Pigmentoberfläche sehr unterschiedlich und daher die Oberflächenmodifizierung inhomogen sein kann. Auch der Silan-Anbindungsgrad an die beschichtete Pigmentoberfläche kann aufgrund der Konkurrenzsituation zwischen den OH-Gruppen der monomeren Silane und den reaktiven OH-Gruppen auf der Oberfläche der zu beschichtenden Pigmente variieren und somit zu einer weiteren Inhomogenität der Oberflächenmodifizierung führen. Diese Inhomogenität der Oberflächenmodifizierung wird insbesondere unter den Bedingungen des Schwitzwassertests in verschlechterten optischen und Haftungseigenschaften deutlich.

Ein weiterer, insbesondere für Außenanwendungen und in Automobillackierungen nicht zu vernachlässigender Faktor ist die Witterungsstabilität der eingesetzten Pigmente. Die erfindungsgemäßen Perlglanzpigmente zeichnen sich in einer beschleunigten Bewitterungsprüfung durch ihre geringen Farbtonabweichungen bzw. ihren geringen Glanzverlust aus.

Aufgrund der UV-Aktivität titandioxidhaltiger Perlglanzpigmente, die einen beschleunigten Abbau von organischen Verbindungen, z. B. einer Bindemittelmatrix, auslösen kann, werden in Außenanwendungen stabilisierte Perlglanzpigmente eingesetzt. Um die Wirksamkeit der Stabilisierung zu überprüfen, werden Lackapplikationen von Perlglanzpigmenten UV-Licht ausgesetzt und anschließend farbmetrisch im Vergleich zu den entsprechenden unbelasteten Proben vermessen. Die Farbtonabweichung $\Delta E^*$ ist ein Maß für die Lichtechtheit des pigmentierten Lacks. Die erfindungsgemäßen Perlglanzpigmente beeinflussen die optischen Eigenschaften eines melaminhaltigen Lackes nach UV-Belastung nur unwesentlich.

Gegenstand der Erfindung ist außerdem die Verwendung der erfindungsgemäßen Perlglanzpigmente zur Pigmentierung von Lacken, Druckfarben, Kunststoffen und Kosmetika. Hierfür können sie als Mischungen mit handelsüblichen Pigmenten, beispielsweise anorganischen und organischen Absorptionspigmenten, Effektpigmenten, wie Metalleffektpigmenten und Perlglanzpigmenten und/ oder LCP-Pigmenten, eingesetzt werden.

Bevorzugte Verwendungen der erfindungsgemäßen wetterstabilen Perlglanzpigmente sind Beschichtungen, Lacke, Automobillacke, Pulverlacke und Druckfarben.

Bei einer weiteren Ausführungsform umfasst die vorliegende Erfindung wetterstabile Perlglanzpigmente basierend auf synthetischen Glimmerplättchen, welche mit wenigstens einer Rutil-$TiO_2$ Schicht beschichtet ist. Die Menge an $TiO_2$ beträgt wenigstens 40 Gew.-%, bezogen auf das Gesamtgewicht des Perlglanzpigments. Die Deckschicht weist dabei folgende Komponenten auf:

a) 1,5 bis 2,5 Gew.-% Zinnoxid, berechnet als $SnO_2$, bezogen auf das Gesamtgewicht des Perlglanzpigments, gefolgt von

b) einer Cer-haltigen Schicht, berechnet als elementares Cer, in einer Menge von 0,5 bis 0,9 Gew.-% Cer, bezogen auf das Gesamtgewicht des Perlglanzpigments, und

c) einer äußeren organischen Schicht, die auch als Kompatibilisierungsschicht bezeichnet werden kann, welche aus wasserbasierenden oligomeren Silanen besteht,

wobei diese Aminogruppen umfassen.

Bei einer weiteren Ausführungsform umfasst die Erfindung wetterstabile Perlglanzpigmente basierend auf Glasplättchen mit einem Span $\Delta D$ von 0,8 bis 1,2, welche mit wenigstens einer Rutil-$TiO_2$ Schicht beschichtet ist. Die Menge an $TiO_2$ beträgt wenigstens 40 Gew.-%, bezogen auf das Gesamtgewicht des Perlglanzpigments. Die Deckschicht weist dabei folgende Komponenten auf:

a) 1,5 bis 2,5 Gew.-% Zinnoxid, berechnet als $SnO_2$, bezogen auf das Gesamtgewicht des Perlglanzpigments, gefolgt von

b) einer Cer-haltigen Schicht, berechnet als elementares Cer, in einer Menge von 0,5 bis 0,9 Gew.-% Cer, bezogen auf das Gesamtgewicht des Perlglanzpigments, und

c) einer äußeren organischen Kompatibilisierungsschicht, welche aus wasserbasierenden oligomeren Silanen besteht, wobei diese Aminogruppen umfassen.

Gemäß einer bevorzugten Variante der Erfindung besteht die Deckschicht des erfindungsgemäße Perlglanzpigment ausschließlich aus den drei Schichten a), b) und c). Bei der Zinnoxidschicht und Cer-haltigen Schicht, wie oben definiert, handelt es sich vorzugsweise um nichtcalcinierte Schichten.

**Beispiele**

Die folgenden Beispiele sollen die Erfindung näher erläutern, ohne sie jedoch zu beschränken. Alle Prozentangaben sind als Gew.-% zu verstehen.

**I Herstellung der Pigmente**

**Beispiel 1:**

100 g kommerziell erhältliches, blaues Perlglanzpigment auf Basis von $TiO_2$ beschichtetem synthetischem Glimmer der Feinheit 10 - 40 μm (Symic C261, Fa Eckart) wurde in 900 g Wasser suspendiert. Anschließend wurde die Dispersion auf 70 °C erwärmt und bei einem pH-Wert von 2,2 eine Lösung von 5,17 g $SnCl_4$ x $5H_2O$ in 45 ml verdünnter Salzsäure mit einer Geschwindigkeit von 2 ml/min zudosiert, wobei der pH-Wert durch gleichzeitiges Zutropfen von 20%iger Natronlauge konstant gehalten wurde. Danach wurde noch 20 min nachgerührt und der pH-Wert mit Natronlauge auf 4,2 angehoben. Dann wurde eine Lösung bestehend aus 2,17 g $Ce(NO_3)_3$ x $6H_2O$ gelöst in 50mL VE-Wasser zudosiert. Gleichzeitig wurde durch Zutropfen einer 10 %-igen NaOH-Lösung der pH-Wert konstant gehalten. Nachdem die Lösung vollständig zugegeben wurde, wurde 1 h nachgerührt und im Anschluss daran der pH-Wert mit verdünnter Natronlauge auf 10 eingestellt. Danach wurden 5,7g Dynasylan 1146 verdünnt mit 24,3 g VE-Wasser in die Suspension zugegeben und 180 min nachgerührt, dann wurde die Suspension abfiltriert und der Filterkuchen mit VE-Wasser nachgewaschen. Der Filterkuchen wurde bei 95°C unter Vakuum getrocknet.

Das Pigment hatte einen $SnO_2$-Gehalt von 2,2 und einen Ce-Gehalt von 0,7 Gew.-% (entspricht 0,82 Gew.-% $Ce_2O_3$), bezogen auf das Gesamtgewicht des Pigments. Das Pigment wies folgende Partikelgrößenverteilung auf (MALVERN Mastersizer MS 2000): $D_{10}$ = 11,2 μm, $D_{50}$ = 22,5 μm, $D_{90}$ = 39,2 μm. Der C-Gehalt lag bei 0,2 Gew.-%.

**Beispiel 2:**

100g kommerziell erhältliches, rotes Perlglanzpigment auf Basis von Ti02 beschichtetem synthetischem Glimmer der Feinheit 10 - 40 μm (Symic C241, Fa Eckart) wurde in 900 g Wasser suspendiert. Anschließend wurde die Dispersion auf 70 °C erwärmt und bei einem pH-Wert von 2,2 eine Lösung von 5,64 g $SnCl_4*5H_2O$ in 45 ml verdünnter Salzsäure mit einer Geschwindigkeit von 2 ml/min zudosiert, wobei der pH-Wert durch gleichzeitiges Zutropfen von 20 %iger Natronlauge konstant gehalten wurde. Danach wurde noch 20 min nachgerührt und der pH-Wert mit Natronlaugeauf 4,2 angehoben. Dann wurde eine Lösung bestehend aus 2,17 g $Ce(NO_3)_3$ x $6H_2O$ gelöst in 50 mL VE-Wasser zudosiert. Gleichzeitig wurde durch Zutropfen einer 10 %-igen NaOH-Lösung der pH-Wert konstant gehalten. Nachdem die Lösung vollständig zugegeben wurde, wurde 1 h nachgerührt und im Anschluss daran der pH-Wert mit verdünnter Natronlauge auf 10 eingestellt. Danach wurden 5,7g Hydrosil 2627 verdünnt mit 24,3 g VE-Wasser in die Suspension zugegeben und 180 min nachgerührt, dann wurde die Suspension abfiltriert und der Filterkuchen mit VE-Wasser nachgewaschen. Der Filterkuchen wurde bei 95°C unter Vakuum getrocknet.

Das Pigment hatte einen $SnO_2$-Gehalt von 2,4 und einen Ce-Gehalt von 0,7 Gew.-% (entspricht 0,82 Gew.-% $Ce_2O_3$), bezogen auf das Gesamtgewicht des Pigments.

Das Pigment wies folgende Partikelgrößenverteilung auf (MALVERN Mastersizer MS 2000): $D_{10}$ = 10,6 μm, $D_{50}$ = 22,3 μm, $D_{90}$ = 40,4 μm. Der C-Gehalt lag bei 0,1 Gew.-%.

**Beispiel 3:**

100g des erhaltenen, grünfarbenen Perlglanzpigmentes aus Vergleichsbeispiel 7 wurden in 900 g Wasser suspendiert. Anschließend wurde die Dispersion auf 70 °C erwärmt und bei einem pH-Wert von 2,2 eine Lösung von 5,64 g $SnCl_4*5H_2O$ in 45 ml verdünnter Salzsäure mit einer Geschwindigkeit von 2 ml/min zudosiert, wobei der pH-Wert

durch gleichzeitiges Zutropfen von 20%iger Natronlauge konstant gehalten wurde. Danach wurde noch 20 min nachgerührt und der pH-Wert mit Natronlauge auf 4,2 angehoben. Dann wurde eine Lösung bestehend aus 2,17 g $Ce(NO_3)_3$ x $6H_2O$ gelöst in 50mL VE-Wasser zudosiert. Gleichzeitig wurde durch Zutropfen einer 10 %-igen NaOH-Lösung der pH-Wert konstant gehalten. Nachdem die Lösung vollständig zugegeben wurde, wurde 1 h nachgerührt und im Anschluss daran der pH-Wert mit verdünnter Natronlauge auf 10 eingestellt. Danach wurden 5,7 g Hydrosil 2907 verdünnt mit 24,3 g VE-Wasser in die Suspension zugegeben und 180 min nachgerührt, dann wurde die Suspension abfiltriert und der Filterkuchen mit VE-Wasser nachgewaschen. Der Filterkuchen wurde bei 95°C unter Vakuum getrocknet.

Das Pigment hatte $SnO_2$-Gehalt von 2,4 und einen Ce-Gehalt von 0,7 Gew.-% (entspricht 0,82 Gew.-% $Ce_2O_3$), bezogen auf das Gesamtgewicht des Pigments.

Das Pigment wies folgende Partikelgrößenverteilung auf (MALVERN Mastersizer MS 2000): $D_{10}$ = 8,7 μm, $D_{50}$ = 18,8 μm, $D_{90}$ = 35,9 μm. Der C-Gehalt lag bei 0,1 Gew.-%.

**Vergleichsbeispiel 1:**

100g kommerziell erhältliches, blaues Perlglanzpigment auf Basis von Ti02 beschichtetem Glimmer der Feinheit 5 - 25 μm (PHOENIX PX 2261, Fa Eckart) wurde in 900 g Wasser suspendiert. Anschließend wurde die Dispersion auf 70 °C erwärmt und bei einem pH-Wert von 2,4 eine Lösung von 2,30 g $SnCl_4$ x $5H_2O$ in 45 ml verdünnter Salzsäure mit einer Geschwindigkeit von 2 ml/min zudosiert, wobei der pH-Wert durch gleichzeitiges Zutropfen von 20 %iger Natronlauge konstant gehalten wurde. Nach 30 min Nachrühren wurde der Feststoff abfiltriert, mit Wasser gewaschen und bei 120 °C getrocknet.

Das trockene, beschichtete Pigment wurde in 300 ml Isopropanol suspendiert und auf Siedetemperatur gebracht. Unter Rühren gab man zunächst 2,0 g $H_2O$ und anschließend innerhalb einer Stunde eine Lösung aus 2,17 g $Ce(NO_3)_3$ x $6H_2O$ in 100 g Isopropanol hinzu. Anschließend wurde eine Lösung von 0,45 g Ethylendiamin in 8 g $H_2O$ hinzugegeben. Danach leitete man über einen Zeitraum von 2 h 14,6 g Tetraethoxysilan und 20 g Isopropanol mit einer Dosierpumpe (Ismatec) kontinuierlich ein. Anschließend ließ man die Suspension noch 6 h lang weiter reagieren. Dann gab man 0,4 g Dynasylan AMEO und 1,3 g Dynasylan 9116 hinzu und ließ langsam abkühlen. Das Gemisch wurde über Nacht bei Raumtemperatur gerührt und am nächsten Tag abgenutscht. Der Pigmentfilterkuchen wurde anschließend 6 h lang bei 100°C unter Vakuum getrocknet.

Das Pigment hatte einen $SnO_2$-Gehalt von 1,0 %, einen Cer-Gehalt von 0,7 Gew.-%, einen C-Gehalt von 0,9 Gew.-% und einen $SiO_2$-Gehalt von 4,2 Gew.-%.

**Vergleichsbeispiel 2**

100g kommerziell erhältliches, blaues Perlglanzpigment auf Basis von $TiO_2$ beschichtetem synthetischem Glimmer der Feinheit 10 - 40 μm (Symic C261, Fa Eckart) wurde in 900 g Wasser suspendiert. Anschließend wurde die Dispersion auf 70 °C erwärmt und bei einem pH-Wert von 2,4 eine Lösung von 2,30 g $SnCl_4$ x 5 $H_2O$ in 45 ml verdünnter Salzsäure mit einer Geschwindigkeit von 2 ml/min zudosiert, wobei der pH-Wert durch gleichzeitiges Zutropfen von 20 %iger Natronlauge konstant gehalten wurde. Nach 30 min Nachrühren wurde der Feststoff abfiltriert, mit Wasser gewaschen und bei 120 °C getrocknet.

Das trockene, beschichtete Pigment wurde in 300 ml Isopropanol suspendiert und auf Siedetemperatur gebracht. Unter Rühren gab man zunächst 2,0 g $H_2O$ und anschließend innerhalb einer Stunde eine Lösung aus 2,17 g $Ce(NO_3)_3$ x $6H_2O$ in 100 g Isopropanol hinzu. Anschließend wurde eine Lösung von 0,45 g Ethylendiamin in 8 g $H_2O$ hinzugegeben. Danach leitete man über einen Zeitraum von 2h 14,6 g Tetraethoxysilan und 20 g Isopropanol mit einer Dosierpumpe (Ismatec) kontinuierlich ein. Anschließend ließ man die Suspension noch 6 h lang weiter reagieren. Dann gab man 0,4 g Dynasylan AMEO und 1,3 g Dynasylan 9116 hinzu und ließ langsam abkühlen. Das Gemisch wurde über Nacht bei Raumtemperatur gerührt und am nächsten Tag abgenutscht. Der Pigmentfilterkuchen wurde anschließend 6 h lang bei 100°C unter Vakuum getrocknet.

Das Pigment hatte einen theoretischen $SnO_2$-Gehalt von 1,0 %, einen Cer-Gehalt von 0,7 %, einen C-Gehalt von 0,9 Gew.-% und einen $SiO_2$-Gehalt von 4,2 Gew.-%.

**Vergleichsbeispiel 3:**

100g kommerziell erhältliches, blaues Perlglanzpigment auf Basis von Ti02 beschichtetem synthetischem Glimmer der Feinheit 10 - 40 μm (Symic C261, Fa Eckart) wurde in 900 g Wasser suspendiert. Anschließend wurde die Dispersion auf 70 °C erwärmt und bei einem pH-Wert von 2,4 eine Lösung von 2,30 g $SnCl_4$ x 5 $H_2O$ in 45 ml verdünnter Salzsäure mit einer Geschwindigkeit von 2 ml/min zudosiert, wobei der pH-Wert durch gleichzeitiges Zutropfen von 20 %iger Natronlauge konstant gehalten wurde. Danach wurde der pH-Wert mit 5 Gew.-%iger NaOH-Lösung auf 7,5 angehoben und 15 min gerührt. Eine Wasserglaslösung (15 g Wasserglaslösung, 3,9 Gew.-% $SiO_2$, gemischt mit 20,7

g VE-Wasser) wurde sodann langsam in die Suspension eingeleitet und der pH-Wert konstant bei pH 7,5 gehalten. Danach wurde noch 20 min nachgerührt und der pH-Wert mit verdünnter Salzsäure auf 4,2 gesenkt. Dann wurde eine Lösung bestehend aus 2,17 g Ce(N03)3 x 6H2O gelöst in 50 mL VE-Wasser zudosiert. Gleichzeitig wurde durch Zutropfen einer 10 %-igen NaOH-Lösung der pH-Wert konstant gehalten. Nachdem die Lösung vollständig zugegeben wurde, wurde 1 h nachgerührt und im Anschluss daran der pH-Wert mit verdünnter Natronlauge auf 10 eingestellt. Danach wurden 0,4 g Dynasylan AMEO und 1,3 g Dynasylan 9116 in die Suspension zugegeben und 280 min nachgerührt, dann wurde die Suspension abfiltriert und der Filterkuchen mit VE-Wasser nachgewaschen. Der Filterkuchen wurde bei 95°C unter Vakuum getrocknet.

Das Pigment hatte einen Ce-Gehalt von 0,7 Gew.-%, bezogen auf das Gesamtgewicht des Pigments.

Das Pigment wies folgende Partikelgrößenverteilung auf (MALVERN Mastersizer MS 2000): $D_{10}$ = 11,5 $\mu$m, $D_{50}$ = 22,9 $\mu$m, $D_{90}$ = 39,6 $\mu$m.

**Vergleichsbeispiel 4:**

100g kommerziell erhältliches, blaues Perlglanzpigment auf Basis von $TiO_2$ beschichtetem synthetischem Glimmer der Feinheit 10-40 $\mu$m (Symic C261, Fa Eckart) wurde in 900 g Wasser suspendiert. Anschließend wurde die Dispersion auf 70 °C erwärmt und bei einem pH-Wert von 2,4 eine Lösung von 2,30 g $SnCl_4$ x 5 $H_2O$ in 45 ml verdünnter Salzsäure mit einer Geschwindigkeit von 2 ml/min zudosiert, wobei der pH-Wert durch gleichzeitiges Zutropfen von 20 %iger Natronlauge konstant gehalten wurde. Danach wurde noch 20 min nachgerührt und der pH-Wert mit verdünnter Salzsäure auf 4,2 gesenkt. Dann wurde eine Lösung bestehend aus 2,17 g $Ce(NO_3)_3$ x $6H_2O$ gelöst in 50mL VE-Wasser zudosiert. Gleichzeitig wurde durch Zutropfen einer 10 %-igen NaOH-Lösung der pH-Wert konstant gehalten. Nachdem die Lösung vollständig zugegeben wurde, wurde 1 h nachgerührt und im Anschluss daran der pH-Wert mit verdünnter Natronlauge auf 10 eingestellt. Danach wurden 0,4 g Dynasylan AMEO und 1,3 g Dynasylan 9116 in die Suspension zugegeben und 280 min nachgerührt, dann wurde die Suspension abfiltriert und der Filterkuchen mit VE-Wasser nachgewaschen. Der Filterkuchen wurde bei 95°C unter Vakuum getrocknet.

Das Pigment hatte einen Ce-Gehalt von 0,7 Gew.-%, bezogen auf das Gesamtgewicht des Pigments.

Das Pigment wies folgende Partikelgrößenverteilung auf (MALVERN Mastersizer MS 2000): $D_{10}$ = 11,2 $\mu$m, $D_{50}$ = 22,5 $\mu$m, $D_{90}$ = 38,9 $\mu$m.

**Vergleichsbeispiel 5:**

100g kommerziell erhältliches, rotes Perlglanzpigment auf Basis von Ti02 beschichtetem synthetischem Glimmer der Feinheit 10 - 40 $\mu$m (Symic C241, Fa Eckart) wurde in 900 g Wasser suspendiert. Anschließend wurde die Dispersion auf 70 °C erwärmt und bei einem pH-Wert von 2,4 eine Lösung von 2,48 g $SnCl_4$ x 5 $H_2O$ in 45 ml verdünnter Salzsäure mit einer Geschwindigkeit von 2 ml/min zudosiert, wobei der pH-Wert durch gleichzeitiges Zutropfen von 20 %iger Natronlauge konstant gehalten wurde. Danach wurde noch 20 min nachgerührt. Im Anschluss daran wurde der pH-Wert mit verdünnter Natronlauge auf 10 eingestellt. Danach wurden 5,7g Hydrosil 2627 verdünnt mit 24,3g VE-Wasser in die Suspension zugegeben und 180 min nachgerührt, dann wurde die Suspension abfiltriert und der Filterkuchen mit VE-Wasser nachgewaschen. Der Filterkuchen wurde bei 95°C unter Vakuum getrocknet.

Das Pigment wies folgende Partikelgrößenverteilung auf (MALVERN Mastersizer MS 2000): $D_{10}$ = 10,9 $\mu$m, $D_{50}$ = 21,8 $\mu$m, $D_{90}$ = 38,6 $\mu$m. Der C-Gehalt lag bei 0,1 Gew.-%

**Vergleichsbeispiel 6:**

100 g des Pigmentes aus Vergleichsbeispiel 7 wurden in 850 ml VE-Wasser suspendiert und unter turbulentem Rühren auf 85 °C erhitzt. Der pH-Wert wurde mit verdünnter Salzsäure auf 4,2 gesenkt. Dann wurde eine Lösung bestehend aus 0,93 g $Ce(NO_3)_3$ x 6 $H_2O$ gelöst in 40mL VE-Wasser zudosiert. Gleichzeitig wurde durch Zutropfen einer 10%igen NaOH-Lösung der pH-Wert konstant gehalten. Nachdem die Lösung vollständig zugegeben wurde, wurde 1 h nachgerührt und im Anschluss daran der pH-Wert mit verdünnter Natronlauge auf 10 eingestellt. Danach wurden 5,7g Dynasylan 1146 verdünnt mit 24,3 g VE-Wasser in die Suspension zugegeben und 180 min nachgerührt, dann wurde die Suspension abfiltriert und der Filterkuchen mit VE-Wasser nachgewaschen. Der Filterkuchen wurde bei 95°C unter Vakuum getrocknet. Das Pigment hatte einen theoretischen Ce-Gehalt von 0,3 Gew.-%, bezogen auf das Gesamtgewicht des Pigments.

Das Pigment wies folgende Partikelgrößenverteilung auf (MALVERN Mastersizer MS 2000): $D_{10}$ = 8,2 $\mu$m, $D_{50}$ = 18,2 $\mu$m, $D_{90}$ = 35,3 $\mu$m. Der C-Gehalt lag bei 0,2 Gew.-%

**Vergleichsbeispiel 7:**

100 g synthetische Glimmerplättchen FM1040 der Firma Jhejan, China mit der Partikelgrößenverteilung nach MALVERN Mastersizer MS 2000: $D_{10}$=11,4 μm, $D_{50}$=21,8 μm, $D_{90}$=40,0 μm, wurden in 850 ml VE-Wasser suspendiert und unter Rühren auf 80 °C erhitzt. Der pH-Wert wurde mit verdünnter Salzsäure auf 1,9 gesenkt. Dann wurde durch Zugabe einer Lösung, bestehend aus 3 g $SnCl_4$ x 5 $H_20$ (in 10 ml konz. HCl plus 50 ml VE-Wasser), unter gleichzeitiger Zudosierung von einer 10% NaOH, eine Schicht gebildet. Danach wurde der pH-Wert mit verdünnter HCl auf pH 1,6 heruntergesetzt und sodann eine Lösung von 950 ml $TiCl_4$ (200 g $TiO_2$/l VE-Wasser) parallel mit 10 %-iger wässriger Natronlauge in die Suspension hinzudosiert. Nach dem Ende der Beschichtung wurde 1 h nachgerührt, und abfiltriert.

Der Filterkuchen wurde bei 90°C im Vakuumtrockenschrank für 12 h getrocknet und anschließend kalziniert. Es wurde ein intensiv grün interferierendes Perlglanzpigment erhalten (Interferenz 3. Ordnung).

**Vergleichsbeispiel 8:**

Rotes Interferenz Perlglanzpigment auf Basis von synthetischen Glimmerplättchen Symic C241 der Fa. Eckart GmbH.

**II Charakterisierung der Pigmente**

**IIa Teilchengrößenmessung**

Die Größenverteilungskurve der plättchenförmigen synthetischen Substrate sowie der Perlglanzpigmente wurde mit einem Gerät der Fa. Malvern (Gerät: MALVERN Mastersizer 2000) gemäß Herstellerangaben bestimmt. Hierzu wurden ca. 0,1 g des entsprechenden Substrates bzw. Pigmentes als wässrige Suspension, ohne Zusatz von Dispergierhilfsmitteln, unter ständigem Rühren mittels einer Pasteurpipette in die Probenvorbereitungszelle des Messgerätes gegeben und mehrmals vermessen. Aus den einzelnen Messergebnissen wurden die resultierenden Mittelwerte gebildet. Die Auswertung der Streulichtsignale erfolgte dabei nach der Fraunhofer Methode.

Unter der mittleren Größe $D_{50}$ wird im Rahmen dieser Erfindung der $D_{50}$-Wert der Summenhäufigkeitsverteilung der volumengemittelten Größenverteilungsfunktion, wie sie durch Laserbeugungsmethoden erhalten werden, verstanden. Der $D_{50}$-Wert gibt an, dass 50 % der nichtmetallischen plättchenförmigen synthetischen Substrate bzw. Pigmente einen Durchmesser aufweisen, der gleich oder kleiner als der angegebene Wert, beispielsweise 20 μm, ist. Entsprechend gibt der $D_{90}$-Wert an, dass 90 % der Substrate bzw. Pigmente einen Durchmesser aufweisen, der gleich oder kleiner als der jeweilige Wert ist. Weiterhin gibt der $D_{10}$-Wert an, dass 10 % der Substrate bzw. Pigmente einen Durchmesser aufweisen, der gleich oder kleiner als der jeweilige Werte ist.

**IIb Bestimmung der mittleren Dicke der plättchenförmigen synthetischen Substrate**

Zur Bestimmung der mittleren Dicke der nichtmetallischen plättchenförmigen synthetischen Substrate wurden die Substrate oder die Pigmente 10 Gew.-%-ig in einem 2K Klarlack Autoclear Plus HS, Fa. Sikkens, mit einem Hülsenpinsel eingearbeitet und mit Hilfe einer Spiralrakel (26 μm Nassfilmdicke) auf eine Folie appliziert und getrocknet. Nach 24 h Trocknung wurden von diesen Rakelabzügen Querschliffe angefertigt, die in rasterelektronenmikroskopisch vermessen wurden. Hierbei wurden mindestens 100 Pigmentteilchen vermessen, um eine aussagefähige Statistik zu erhalten.

**IIc Bestimmung des Ceroxidgehalts**

Die Ceroxidgehalt der Pigmente wurden mittels Röntgenfluoreszenzanalyse (RFA) bestimmt.

Hierzu wurde das Pigment in eine Lithiumtetraboratglastablette eingearbeitet, in Festprobenmessbechern fixiert und daraus vermessen. Als Messgerät diente das Gerät Advantix ARL, Fa. Thermo Scientific.

**III Wetterbeständigkeit der Pigmente**

**A Schwitzwassertest**

Einige Pigmentproben wurden in ein Wasserlacksystem eingearbeitet und die Prüfapplikationen durch Spritzlackierung hergestellt. Der Basislack wurde mit einem handelsüblichen 1 K-Klarlack überlackiert und anschließend eingebrannt. Diese Applikationen wurden nach DIN 50 017 (Kondenswasser-Konstantklimate) geprüft. Die Haftfestigkeit wurde mittels Gitterschnitt nach DIN EN ISO 2409 sofort nach Testende im Vergleich zur unbelasteten Probe geprüft.

Hierbei bedeutet Gt 0 keine Veränderung und Gt 5 eine sehr starke Veränderung.

Das Quellverhalten wurde unmittelbar nach Schwitzwasserbelastung in Anlehnung an die DIN 53230 visuell beurteilt. Hierbei bedeutet die Kennzahl 0: keine Veränderung und die Kennzahl 5: sehr starke Veränderung.

Schließlich wurde der DOI (distinctness of image) visuell beurteilt. Er wird u.a. auch durch das jeweilige Substrat beeinflusst und kann sich im Wesentlichen aufgrund der Quellvorgänge durch Wassereinlagerung verändern.

**Tabelle 1: Schwitzwasserergebnisse**

| Probe | Glanz 20° vor SW-Test | Glanz 20° nach SW-Test | Glanzverlust in % | DOI | Gitterschnitt sofort | Quellung visuell |
|---|---|---|---|---|---|---|
| Beispiel 1 | 88,7 | 85,6 | 3,5 % | 80,6 | 0 | 1 |
| Beispiel 2 | 88,6 | 88,7 | 0% | 82,3 | 1 | 0 |
| Vergleichs beispiel 1 | 90,0 | 79,1 | 12,1 % | 85,4 | 0 | 2 |
| Vergleichs beispiel 2 | 88,5 | 55,4 | 37,4% | 76,8 | 0 | 4 |
| Vergleichs beispiel 3 | 88,5 | 21,3 | 75,9% | 80,1 | 4 | 4 |
| Vergleichs beispiel 4 | 88,3 | 68,2 | 22,8 % | 79,8 | 2 | 3 |

Die erfindungsgemäßen Beispiele wiesen eine optimale Schwitzwasserstabiltät auf. Ebenso zeigten die Vergleichsbeispiele 1 und 2 sehr gute Gitterschnittergebnisse. Allerdings zeigte das Vergleichsbeispiel 2 ein extrem starkes Quellverhalten, was vermutlich auf die zusätzliche $SiO_2$-Schicht erklärt werden kann Durch die Vergleichsbeispiele 3 und 4 wurde der negative, quellende Einfluss der $SiO_2$-Schicht zusätzlich bestätigt.

Die Vergleichsbeispiele 3 und 4 zeigten weiterhin eine deutlich schlechtere Haftfestigkeit (Gitterschnitt) was sich u. a. durch die Verwendung von monomeren Silansystemen erklären lässt. Bei Vergleichsbeispiel 4, bei dem alle Beschichtungen in wäßrigem Milieu erfolgten, war vermutlich die Anbindung der Silane, insbesondere des hydrophoben Alkysilans, auf der Pigmentoberfläche nicht optimal.

Da sich die Hydrolyse- und Kondensationsgeschwindigkeiten verschiedener monomerer Silane mithin deutlich unterscheiden können (bis zum 850-fachen), wie in "Hydrolysis and Condensation of organosilanes - EU 10-002/MS/fk/Sept. 97" beschrieben, ist es bei der Verwendung zweier unterschiedlicher Silane, wie in den Vergleichsbeispielen 1 bis 4 und 6 erfolgt, sehr wahrscheinlich, dass das Aminosilan deutlich eher hydrolysiert und/oder kondensiert und sich damit zuerst auf der Pigmentoberfläche festsetzen kann. Auch ist somit der Vernetzungsgrad des bereits umgesetzten Aminosilans unterschiedlich und die Oberflächenmodifizierung kann sehr inhomogen sein. Erst deutlich später kommt es zur Kondensation und damit zur Fällung des Alkylsilanes, welches auf diese Weise einen Teil der vorgelegten Vernetzungsgruppen aus dem Aminosilan überdecken kann, und diese nicht mehr für die Anbindung an das Lacksystem zur Verfügung stehen. Auch dürfte eine Belegung mit Alkylsilan sowohl aufgrund der Vorbelegung mit bereits umgesetzten Aminosilan als auch aufgrund sterischer Hinderung durch die Alkylgruppe nicht optimal an der beschichteten Pigmentoberfläche anbinden können, was die stärkere Quellung der Lackschicht und damit ungünstigere Zwischenhaftung erklären könnte.

Der hohe DOI-Wert des Vergleichsbeispiel 1 lässt sich anhand des verwendeten Ausgangsmaterials erklären. In diesem Beispiel wurde als einziges ein Interferenzpigment Blau basierend auf natürlichem Glimmer verwendet. Dieser ist deutlich dünner als vergleichbare Pigmente basierend auf synthetischen Mica, wodurch die "Abbildeschärfe" positiv beeinflusst wird.

**B WOM-Test (basierend auf roten bzw. grünen Pigmenten mit synthetischem Glimmer als Substrat)**

Die Pigmentproben wurden in ein Wasserlacksystem eingearbeitet und die Prüfapplikationen durch Spritzlackierung hergestellt. Der Basislack wurde mit einem handelsüblichen Klarlack überlackiert und anschließend eingebrannt. Die beschleunigte Bewitterungsprüfung erfolgte nach SAE 2527 in einem Q-Sun Xe 3 HS (Fa. Q-Lab) Xenon-Testgerät. Die Bestimmung der $\Delta E^*$-Werte sowie die Einstufung nach der Grauskala erfolgten jeweils relativ zur entsprechenden unbelasteten Probe.

| | Glanzverlust 20° nach 4000 h | Farbveränderung ΔE* nach 4000 h |
|---|---|---|
| Beispiel 2 | 18 % | 1,42 |
| Vergleichsbeispiel 8 | 43 % | 3,45 |
| Vergleichsbeispiel 6 | 16 % | 2,14 |

Der Glanzabbau sowie die Farbänderung zeigten sich beim Vergleichsbeispiel 8 am stärksten ausgeprägt. Vergleichsbeispiel 6 (ohne $SnO_2$-Schicht) zeigte einen guten Glanzerhalt, jedoch war die Farbänderung aufgrund der höheren Fotoaktivität nur unzureichend.

**C UV-Beständigkeit an Rakelabzügen**

Dieser Test wurde in Anlehnung an den in der EP 0 870 730 beschrieben UV-Schnelltest zur Bestimmung der photochemischen UV-Aktivität von $TiO_2$-Pigmenten durchgeführt.

Hierzu wurden 1,0 g des Perlglanzpigmentes in 9,0 g eines doppelbindungsreichen melaminhaltigen Lackes eindispergiert. Es wurden Rakelabzüge auf kartoniertem Papier angefertigt und diese bei Raumtemperatur getrocknet. Die Rakelabzüge wurden geteilt und jeweils einer der beiden Abschnitte als unbelastetes Vergleichsmuster im Dunkeln gelagert. Anschließend wurden die Proben 150 min lang in einem QUV-Gerät der Fa. Q-Panel mit UV-haltigem Licht (UVA-340 Lampe, Bestrahlungsstärke 1,0 $W/m^2/nm$) bestrahlt. Unmittelbar nach dem Testende wurden mit einem Farbmessgerät CM-508i der Fa. Minolta Farbwerte der belasteten Prüflinge relativ zum jeweiligen Rückstellmuster ermittelt. Die resultierenden ΔE*-Werte sind, nach der Hunter-L*a*b*-Formel berechnet, in Tab. 2 dargestellt.

Im Test wird im Wesentlichen eine graublaue Verfärbung der $TiO_2$-Schicht des Perlglanzpigmentes in den Rakelabzügen aufgrund von unter UV-Lichteinfluß gebildeten Ti(III)-Zentren beobachtet. Bedingung hierfür ist, dass das Elektronenloch das $TiO_2$ räumlich verlassen hat und - etwa durch Reaktion mit olefinischen Doppelbindungen des Bindemittels - nicht unmittelbar wieder mit dem verbleibenden Elektron rekombinieren kann. Da eine melaminhaltige Lackschicht die Diffusion von Wasser(dampf) und Sauerstoff an die Pigmentoberfläche signifikant verlangsamt, findet eine Reoxidation der Titan(III)-Zentren deutlich verzögert statt, so dass die Vergrauung gemessen und der ΔE-Wert als Maß für die UV-Stabilität der Pigmente herangezogen werden kann. Ein größerer ΔE*-Zahlenwert der belasteten Probe relativ zum unbelasteten Rückstellmuster bedeutet somit eine geringere UV-Stabilität des untersuchten Pigments.

**Tabelle 2: UV-Rakeltestergebnisse**

| Probe | Aufbau | ΔE* |
|---|---|---|
| Beispiel 1 | Symic C261/$SnO_2$/$Ce(OH)_3$/Olig. Silan | 1,0 |
| Beispiel 2 | Symic C241/$SnO_2$/$Ce(OH)_3$/Olig. Silan | 1,6 |
| Beispiel 3 | Interferenz Grün//$SnO_2$/$Ce(OH)_3$/olig. Silan | 3,2 |
| Vergleichsbeispiel 5 | Symic C241/$SnO_2$ | 21,4 |
| Vergleichsbeispiel 6 | Interferenz Grün/$Ce(OH)_3$/olig. Silan | 10,4 |
| Vergleichsbeispiel 7 | Interferenz Grün | 28,3 |
| Vergleichsbeispiel 8 | Symic C241 (Interferenz Rot) | 24,0 |

Alle Vergleichsbeispiele wiesen eine deutlich stärkere Farbveränderung (ΔE*) nach entsprechender Belichtung auf. Die zusätzliche $SnO_2$-Zwischenschicht der erfindungsgemäßen Pigmente wirkt als zusätzliche Barriereschicht ggü. Feuchtigkeit, wodurch, in Verbindung mit der Cerhydroxidschicht, die Radikalbildung an der Oberfläche der Pigmente gehemmt und dadurch die Photoaktivtät deutlich verringert wird. Belegt man die Pigmente nur mit den Einzelkomponenten, so ist der Stabilisierungseffekt zwar sichtbar, jedoch deutlich geringer als in der erfindungsgemäßen Kombination.

**D Farbtonkonstanz und optische Eigenschaften im Vergleich zum Ausgangsmaterial**

Anhand von Rakelabzügen der jeweiligen Pigmente in einem konventionellen Nitrocelluloselack (Dr. Renger Erco Bronzemischlack 2615e; Fa. Morton, Pigmentierungshöhe von 6 Gew.-%, bezogen auf das Gesamtgewichtes des Nasslacks) auf Schwarz-Weiß-Deckungskarten (Byko-Chart 2853, Fa. Byk Gardner) wurden eventuell auftretende Farbtonveränderungen visuell begutachtet. Hierbei wurde festgestellt, dass visuell bei den erfindungsgemäßen Perlglanzpigmenten kein Unterschied zum Ausgangsmaterial zu erkennen ist. Dagegen wiesen Rakelabzüge der Pigmente der Vergleichsbeispiele 1 - 3 in Bezug auf das bei den Vergleichsbeispielen eingesetzte Ausgangsmaterial vereinzelt sogenannte Stippen auf.

## Patentansprüche

1. Wetterstabiles Perlglanzpigment, umfassend
ein beschichtetes oder unbeschichtetes plättchenförmiges Substrat, das aus der Gruppe, die aus synthetischen Glimmerplättchen, Glasplättchen, $SiO_2$-Plättchen, $Al_2O_3$-Plättchen, synthetischen Böhmitplättchen, BiOCl-Plättchen und deren Mischungen besteht, ausgewählt ist,
eine farbgebende Beschichtung mit mindestens einem hochbrechenden Metalloxid, und
eine Deckschicht,
wobei die Deckschicht folgende Schichtenfolge umfasst:

   a) eine erste Schicht aus Zinnoxid und/oder Zinnhydroxid und/oder Zinnoxidhydrat,
   b) eine zweite Cer-haltige Schicht, die Ceroxid und/ oder Cerhydroxid und/ oder Ceroxidhydrat umfasst,
   c) eine auf der Cer-haltigen Schicht aufgebrachte organisch-chemische Beschichtung, welche oligomere Silanen enthält oder daraus besteht, wobei die die oligomeren Silane eine oder mehrere Aminogruppen aufweisen und die oligomeren Silanen mit der Cer-haltigen Schicht chemisch verbunden sind.

2. Wetterstabiles Perlglanzpigment nach Anspruch 1,
**dadurch gekennzeichnet,**
**dass** das Substrat der Gruppe, die aus synthetischen Glimmerplättchen, Glasplättchen und deren Mischungen besteht, ausgewählt ist.

3. Wetterstabiles Perlglanzpigment nach einem der beiden Ansprüche 1 oder 2,
**dadurch gekennzeichnet,**
**dass** das Anteil an Zinnoxid, Zinnhydroxid und/oder Zinnoxidhydrat, berechnet als $SnO_2$, in der Deckschicht in einem Bereich von 0,4 bis 4,0 Gew.-%, bezogen auf das Gesamtgewicht des Perlglanzpigments, liegt.

4. Wetterstabiles Perlglanzpigment nach einem der vorstehenden Ansprüche,
**dadurch gekennzeichnet,**
**dass** das Gewichtsverhältnis von Zinnoxid, Zinnhydroxid und/oder Zinnoxidhydrat, berechnet als $SnO_2$, zu Ce, berechnet als elementares Ce, in der Deckschicht in einem Bereich von 2 bis 10 liegt.

5. Wetterstabiles Perlglanzpigment nach einem der vorstehenden Ansprüche,
**dadurch gekennzeichnet,**
**dass** der Gewichtsanteil von Ce, berechnet als elementares Ce, in der Deckschicht in einem Bereich von 0,05 bis 1,5, bezogen auf das Gesamtgewicht des Perlglanzpigments, liegt.

6. Wetterstabiles Perlglanzpigment nach einem der vorstehenden Ansprüche,
**dadurch gekennzeichnet,**
**dass** der Gewichtsanteil von C (Anteil Kohlenstoff), in einem Bereich von 0,03 bis 0,5 Gew.-%, bezogen auf das Gesamtgewicht des Perlglanzpigments, liegt.

7. Wetterstabiles Perlglanzpigment nach einem der vorstehenden Ansprüche,
**dadurch gekennzeichnet,**
**dass** die Deckschicht aus den Schichten a), b) und c) besteht.

8. Wetterstabiles Perlglanzpigment nach einem der vorstehenden Ansprüche,
**dadurch gekennzeichnet,**
**dass** die Reaktionsprodukte der oligomeren Silane unabhängig voneinander eine oder mehrere Alkylgruppen von 1 bis 18 C-Atome aufweisen.

9. Wetterstabiles Perlglanzpigment nach einem der vorstehenden Ansprüche,
**dadurch gekennzeichnet,**
**dass** Anteil der Deckschicht am gesamten Perlglanzpigment in einem Bereich von 1,0 bis 5,0 Gew.-%, bezogen

auf das Gesamtgewicht des Perlglanzpigments, liegt.

10. Wetterstabiles Perlglanzpigment nach einem der vorstehenden Ansprüche,
**dadurch gekennzeichnet,**
**dass** die Beschichtung des Perlglanzpigmentes mit der gesamten Deckschicht in wässrigem Milieu erfolgt ist.

11. Wetterstabiles Perlglanzpigment nach einem der vorstehenden Ansprüche,
**dadurch gekennzeichnet,**
**dass** das Substrat mit einer oder mehreren farbgebenden hochbrechenden Metalloxidschicht(en), die aus der Gruppe, die aus $TiO_2$, $Fe_2O_3$, $TiFe_2O_5$, $Fe_2Ti_3O_9$, $FeTiO_3$ und Mischungen davon besteht, ausgewählt ist, beschichtet ist.

12. Wetterstabiles Perlglanzpigment nach Anspruch 11,
**dadurch gekennzeichnet,**
**dass** die farbgebende hochbrechende Beschichtung $TiO_2$ in der Rutilstruktur umfasst oder daraus besteht.

13. Wetterstabiles Perlglanzpigment nach einem der vorstehenden Ansprüche,
**dadurch gekennzeichnet,**
**dass** das wetterstabile Perlglanzpigment eine Summenhäufigkeitsverteilung, auf Basis einer volumengemittelten Größenverteilungsfunktion mit den Kennzahlen $D_{10}$, $D_{50}$, $D_{90}$, mit einem Span $\Delta D$ von 0,7 - 1,4 aufweist, wobei der Span $\Delta D$ gemäß Formel (I) berechnet ist:

$$\Delta D = (D_{90} - D_{10}) / D_{50} \qquad \text{(I)}$$

14. Verfahren zur Herstellung von wetterstabilem Perlglanzpigment nach einem der vorstehenden Ansprüche,
**dadurch gekennzeichnet,**
**dass** das Verfahren folgende Schritte umfasst:

a) Optional Klassieren von beschichteten oder unbeschichteten plättchenförmigen Substraten unter Erhalt von Substraten, welche vorzugsweise die Kennzahlen $D_{10}$, $D_{50}$, $D_{90}$ aus einer Summenhäufigkeitsverteilung einer volumengemittelten Größenverteilungsfunktion mit einem Span $\Delta D$ in einem Bereich von 0,7-1,4 aufweisen,
b) Suspendieren von beschichteten oder unbeschichteten plättchenförmigen Substraten, optional aus Schritt a), in wässriger Lösung und Beschichten der beschichteten oder unbeschichteten plättchenförmigen Substrate mit einem oder mehreren hochbrechenden Metalloxid(en) unter Erhalt von Perlglanzpigmenten, die optional calciniert werden,
c) Beschichten der in Schritt b) beschichteten Perlglanzpigmente in wässriger Lösung mit Zinnoxid, Zinnhydroxid und/oder Zinnoxidhydrat durch Hydrolyse eines Zinnsalzes oder einer hydrolysierbaren Zinn-metallorganischen Verbindung in einem pH-Bereich von 1,5 bis 3,0,
d) Beschichten der in Schritt c) beschichteten Perlglanzpigmente in wässriger Lösung mit Ceroxid, Cerhydroxid und/oder Ceroxidhydrat durch Hydrolyse eines Cer-salzes oder einer hydrolysierbaren Cer-metallorganischen Verbindung,
e) Beschichten der in Schritt d) beschichteten Perlglanzpigmente in wässriger Lösung mit oligomeren Silanen,
f) Abtrennen der in Schritt e) beschichteten Perlglanzpigmente, optional Waschen mit vollentsalztem Wasser, und
g) optional Trocknen, vorzugsweise bei einer Temperatur aus einem Bereich von 80° bis 160°C.

15. Verwendung von wetterstabilem Perlglanzpigment nach einem der Ansprüche 1 bis 13 zur Pigmentierung von Lacken, Druckfarben, Kunststoffen und Kosmetika.

## Claims

1. Weather-resistant pearlescent pigment, comprising
a coated or uncoated platelet-shaped substrate selected from the group comprising synthetic mica platelets, glass platelets, $SiO_2$ platelets, $Al_2O_3$ platelets, synthetic boehmite platelets, BiOCl platelets and mixtures thereof,
a chromophoric coating with at least one highly refractive metal oxide, and
a top layer,

the top layer comprising the following layer sequence:

a) a first layer of tin oxide and/or tin hydroxide and/or hydrated tin oxide,
b) a second cerium-containing layer comprising cerium oxide and/or cerium hydroxide and/or hydrated cerium oxide,
c) an organic-chemical coating containing or comprising oligomeric silanes applied on top of the cerium-containing layer, the oligomeric silanes having one or more amino groups, and the oligomeric silanes are chemically bonded with the cerium-containing layer.

**2.** Weather-resistant pearlescent pigment as claimed in claim 1,
**characterised in that**
the substrate is selected from the group comprising synthetic mica platelets, glass platelets and mixtures thereof.

**3.** Weather-resistant pearlescent pigment as claimed in one of both claims 1 or 2,
**characterised in that**
the proportion of tin oxide, tin hydroxide and/or hydrated tin oxide in the top layer, calculated as $SnO_2$, is in a range of from 0.4 to 4.0 % by weight relative to the total weight of the pearlescent pigment.

**4.** Weather-resistant pearlescent pigment as claimed in one of the preceding claims,
**characterised in that**
the weight ratio of tin oxide, tin hydroxide and/or hydrated tin oxide, calculated as $SnO_2$, to Ce, calculated as an elementary Ce, in the top layer is in a range of from 2 to 10.

**5.** Weather-resistant pearlescent pigment as claimed in one of the preceding claims,
**characterised in that**
the proportion of weight of Ce, calculated as elementary Ce, in the top layer is in a range of from 0.05 to 1.5, relative to the total weight of the pearlescent pigment.

**6.** Weather-resistant pearlescent pigment as claimed in one of the preceding claims,
**characterised in that**
the proportion by weight of C (proportion of carbon) is in a range of from 0.03 to 0.5 % by weight relative to the total weight of the pearlescent pigment.

**7.** Weather-resistant pearlescent pigment as claimed in one of the preceding claims,
**characterised in that**
the top layer consists of layers a), b) and c).

**8.** Weather-resistant pearlescent pigment as claimed in one of the preceding claims,
**characterised in that**
the reaction products of the oligomeric silanes, independently of one another, have one or more alkyl groups of from 1 to 18 C atoms.

**9.** Weather-resistant pearlescent pigment as claimed in one of the preceding claims,
**characterised in that**
the proportion of the top layer on all of the pearlescent pigment is in a range of from 1.0 to 5.0 % by weight relative to the total weight of the pearlescent pigment.

**10.** Weather-resistant pearlescent pigment as claimed in one of the preceding claims,
**characterised in that**
coating of the pearlescent pigment with all of the top layer takes place in an aqueous medium.

**11.** Weather-resistant pearlescent pigment as claimed in one of the preceding claims,
**characterised in that**
the substrate is coated with one or more chromophoric, highly refractive metal oxide layers selected from the group comprising $TiO_2$, $Fe_2O_3$, $TiFe_2O_5$, $Fe_2Ti_3O_9$, $FeTiO_3$ and mixtures thereof.

**12.** Weather-resistant pearlescent pigment as claimed in claim 11,
**characterised in that**

the chromophoric, highly refractive coating comprises or contains $TiO_2$ in the rutile structure.

**13.** Weather-resistant pearlescent pigment as claimed in one of the preceding claims, **characterised in that** the weather-resistant pearlescent pigment has a cumulative frequency distribution, based on a volume-averaged size distribution function with the values $D_{10}$, $D_{50}$, $D_{90}$, with a span $\Delta D$ of from 0.7 - 1.4, the span $\Delta D$ being calculated on the basis of formula (I):

$$\Delta D = (D_{90} - D_{10})/D_{50} \quad (I).$$

**14.** Method of producing weather-resistant pearlescent pigment as claimed in one of the preceding claims, **characterised in that** the method comprises the following steps:

a) optionally classifying coated or uncoated platelet-shaped substrates to obtain substrates which preferably have the values $D_{10}$, $D_{50}$, $D_{90}$ from a cumulative frequency distribution of a volume-averaged size distribution function with a span $\Delta D$ in a range of from 0.7 - 1.4,
b) suspending coated or uncoated platelet-shaped substrates, optionally from step a), in aqueous solution and coating the coated or uncoated platelet-shaped substrates with one or more highly refractive metal oxides to obtain pearlescent pigments which are optionally calcined,
c) coating the pearlescent pigments coated in step b) in aqueous solution with tin oxide, tin hydroxide and/or hydrated tin oxide by hydrolysing a tin salt or a hydrolysable tin metal-organic compound in a pH range of from 1.5 to 3.0,
d) coating the pearlescent pigments coated in step c) in aqueous solution with cerium oxide, cerium hydroxide and/or hydrated cerium oxide by hydrolysing a cerium salt or a hydrolysable cerium metal-organic compound,
e) coating the pearlescent pigments coated in step d) in aqueous solution with oligomeric silanes,
f) separating off the pearlescent pigments coated in step e), optionally washing with demineralised water, and
g) optionally drying, preferably at a temperature in a range of from 80° to 160°C.

**15.** Use of weather-resistant pearlescent pigment as claimed in one of claims 1 to 13 for the pigmentation of paints, printing inks, plastics and cosmetics.

## Revendications

**1.** Pigment nacré stable aux intempéries, comprenant

un substrat lamellaire revêtu ou non revêtu, qui est choisi dans le groupe consistant en les lamelles de mica synthétiques, les lamelles de verre, les lamelles de $SiO_2$, les lamelles d'$Al_2O_3$, les lamelles de böhmite synthétiques, les lamelles de BiOCl et les mélanges de celles-ci,
un revêtement colorant, contenant au moins un oxyde métallique à grand indice de réfraction, et
une couche de couverture,
la couche de couverture comprenant la séquence de couches suivante :

a) une première couche d'oxyde d'étain et/ou d'hydroxyde d'étain et/ou d'oxyde d'étain hydraté,
b) une deuxième couche, contenant du cérium, qui comprend de l'oxyde de cérium et/ou de l'hydroxyde de cérium et/ou de l'oxyde de cérium hydraté,
c) un revêtement organo-chimique, appliqué sur la couche contenant du cérium, qui contient des silanes oligomères ou en est constitué, les silanes oligomères présentant un ou plusieurs groupes amino, et les silanes oligomères étant chimiquement liés à la couche contenant du cérium.

**2.** Pigment nacré stable aux intempéries selon la revendication 1, **caractérisé en ce que** le substrat est choisi dans le groupe consistant en les lamelles de mica synthétiques, les lamelles de verre et les mélanges de celles-ci.

**3.** Pigment nacré stable aux intempéries selon l'une des revendications 1 ou 2, **caractérisé en ce que** la proportion d'oxyde d'étain, d'hydroxyde d'étain et/ou d'oxyde d'étain hydraté, exprimée en $SnO_2$, dans la couche de couverture

est comprise dans une plage de 0,4 à 4,0 % en poids, par rapport au poids total du pigment nacré.

4. Pigment nacré stable aux intempéries selon l'une des revendications précédentes, **caractérisé en ce que** le rapport en poids entre l'oxyde d'étain, l'hydroxyde d'étain et/ou l'oxyde d'étain hydraté, exprimés en $SnO_2$, et Ce, exprimé en Ce élémentaire, dans la couche de couverture est compris dans une plage de 2 à 10.

5. Pigment nacré stable aux intempéries selon l'une des revendications précédentes, **caractérisé en ce que** la proportion en poids du Ce, exprimé en Ce élémentaire, dans la couche de couverture, est comprise dans une plage de 0,05 à 1,5, par rapport au poids total du pigment nacré.

6. Pigment nacré stable aux intempéries selon l'une des revendications précédentes, **caractérisé en ce que** la proportion en poids de C (proportion de carbone) est comprise dans une plage de 0,03 à 0,5 % en poids, par rapport au poids total du pigment nacré.

7. Pigment nacré stable aux intempéries selon l'une des revendications précédentes, **caractérisé en ce que** la couche de couverture est constituée des couches a), b) et c).

8. Pigment nacré stable aux intempéries selon l'une des revendications précédentes, **caractérisé en ce que** les produits de la réaction des silanes oligomères présentent indépendamment les uns des autres un ou plusieurs groupes alkyle ayant 1 à 18 atomes de carbone.

9. Pigment nacré stable aux intempéries selon l'une des revendications précédentes, **caractérisé en ce que** la proportion de la couche de couverture, par rapport au pigment nacré total, est comprise dans une plage de 1,0 à 5,0 % en poids, par rapport au poids total du pigment nacré.

10. Pigment nacré stable aux intempéries selon l'une des revendications précédentes, **caractérisé en ce que** le revêtement du pigment nacré par la couche de couverture totale a lieu en milieu aqueux.

11. Pigment nacré stable aux intempéries selon l'une des revendications précédentes, **caractérisé en ce que** le substrat est revêtu d'une ou plusieurs couches colorantes d'oxydes métalliques à grand indice de réfraction, qui sont choisies dans le groupe consistant en $TiO_2$, $Fe_2O_3$, $TiFe_2O_5$, $Fe_2Ti_3O_9$, $FeTiO_3$ et les mélanges de ceux-ci.

12. Pigment nacré stable aux intempéries selon la revendication 11, **caractérisé en ce que** le revêtement colorant à grand indice de réfraction comprend du $TiO_2$ à structure rutile, ou en est constitué.

13. Pigment nacré stable aux intempéries selon l'une des revendications précédentes, **caractérisé en ce que** le pigment nacré stable aux intempéries présente des caractéristiques $D_{10}$, $D_{50}$, $D_{90}$ de la distribution de fréquences cumulées de la fonction de répartition dimensionnelle moyennée en volume, avec un écart $\Delta D$ de 0,7 à 1,4, l'écart $\Delta D$ étant calculé selon la Formule (I) :

$$\Delta D = (D_{90} - D_{10})/D_{50} \qquad (I).$$

14. Procédé de fabrication du pigment nacré stable aux intempéries selon l'une des revendications précédentes, **caractérisé en ce que** le procédé comprend les étapes suivantes :

a) en option, classification des substrats lamellaires revêtus ou non revêtus, avec obtention de substrats qui présentent les caractéristiques $D_{10}$, $D_{50}$, $D_{90}$ de la distribution de fréquences cumulées de la fonction de répartition dimensionnelle moyennée en volume, avec un écart $\Delta D$ compris dans une plage de 0,7 à 1,4,
b) mise en suspension de substrats lamellaires revêtus ou non revêtus, en option de l'étape a), dans une solution aqueuse, et application sur les substrats lamellaires revêtus ou non revêtus d'un ou plusieurs oxydes métalliques à grand indice de réfraction, avec obtention de pigments nacrés qui en option subissent une calcination,
c) application sur les pigments nacrés revêtus dans l'étape b), en solution aqueuse, d'oxyde d'étain, d'hydroxyde d'étain et/ou d'oxyde d'étain hydraté, par hydrolyse d'un sel d'étain ou d'un composé organométallique hydrolysables de l'étain, dans une plage de pH de 1,5 à 3,0,
d) application, sur les pigments nacrés revêtus dans l'étape c), en solution aqueuse, d'oxyde de cérium, d'hydroxyde de cérium et/ou d'oxyde de cérium hydraté, par hydrolyse d'un sel de cérium ou d'un composé organométallique hydrolysable du cérium,
e) application de silanes oligomères sur les pigments nacrés revêtus dans l'étape d), en solution aqueuse,
f) séparation des pigments nacrés revêtus dans l'étape e), en option lavage avec de l'eau entièrement déminéralisée, et
g) en option, séchage, de préférence à une température comprise dans une plage de 80 à 160°C.

**15.** Utilisation des pigments nacrés stables aux intempéries selon l'une des revendications 1 à 13 pour pigmenter des vernis, des encres d'imprimerie, des matières plastiques et des produits cosmétiques.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0632109 A1
- EP 0888410 B1
- EP 1682622 B1
- EP 0881998 B1
- DE 10348174 A1
- EP 1084198 B1
- DE 102006009130 A1
- EP 1808465 A1
- EP 0289240 A1
- WO 2004056716 A1
- WO 2005063637 A1
- EP 1980594 B1
- EP 0289240 B1
- EP 2217664 B1
- EP 0675128 A
- EP 0716127 A
- EP 0716128 A
- EP 0870730 A